# EUROPEAN PATENT SPECIFICATION

(11) **EP 2 421 260 B1**
(45) Date of publication and mention of the grant of the patent: **05.04.2017**
(21) Application number: 10764265.4
(22) Date of filing: 14.04.2010
(51) Int. Cl.: H04N 5/445

(54) **CONTENT RECOMMENDING DEVICE, CONTENT RECOMMENDING SYSTEM, CONTENT RECOMMENDING METHOD, PROGRAM, AND INTEGRATED CIRCUIT**
INHALTSEMPFEHLUNGSEINRICHTUNG, INHALTSEMPFEHLUNGSSYSTEM, INHALTSEMPFEHLUNGSVERFAHREN, PROGRAMM UND INTEGRIERTE SCHALTUNG
DISPOSITIF DE RECOMMANDATION DE CONTENU, SYSTÈME DE RECOMMANDATION DE CONTENU, PROCÉDÉ DE RECOMMANDATION DE CONTENU, PROGRAMME, ET CIRCUIT INTÉGRÉ

(30) Priority: 16.04.2009 EP 09158043
(43) Date of publication of application: 22.02.2012
(73) Proprietor: Panasonic Intellectual Property Management Co., Ltd., Osaka-shi, Osaka 540-6207 (JP)
(72) Inventor: BECKER, Ralf, 63225 Langen (DE); REY, José Luis, 63225 Langen (DE); SCHLOCKERMANN, Martin, 63225 Langen (DE); NAKANO, Toshihisa, Osaka-shi, Osaka 540-6207 (JP); KAWAGUCHI, Toru, Osaka-shi, Osaka 540-6207 (JP)
(74) Representative: Grünecker Patent- und Rechtsanwälte PartG mbB
(86) International application number: PCT/JP2010/002705
(87) International publication number: WO 2010/119678

(56) References cited:
- EP-A- 1 363 204
- WO-A-02/07433
- JP-A- 2005 159 579
- JP-A- 2007 028 463
- JP-A- 2007 189 459
- JP-A- 2008 125 022
- JP-A- 2009 044 435
- JP-A- 2009 071 624
- US-A1- 2006 136 966
- US-A1- 2007 154 163
- US-A1- 2008 168 503

## Description

### [Technical Field]

The present invention relates to a content recommendation device which recommends content to user, a content recommendation system, and a content recommendation method.

### [Background Art]

Traditionally, there was a clear separation between content distributed by broadcast and content available over service networks, such as web content (Internet content).
Broadcast content such as audio-visual content, also known as TV or television content is traditionally provided in a linear fashion utilizing broadcasting networks, for instance based on satellite, cable or terrestrial distribution systems (analog or digital). The linear fashion refers to a state where the content is constantly provided.

More recently, with a rise in popularity of the Internet, audio-visual content has become increasingly available over the Internet. Internet-based audio-visual content is typically provided in a non-linear fashion for instance, streaming or download utilizing service networks. The non-linear fashion refers to the state where the content is provided on demand. Preferably, broadband communications networks are utilized, for instance, Digital Subscriber Line (DSL).

Thus, each content type was provided using different distribution paths. More specifically, broadcast is provided by a broadcast infrastructure (broadcast networks), and web content is provided via service networks such as the Internet, or parts thereof, or any other Internet Protocol (IP)-based network etc.

Note that, the service provided via the service network is referred to as the network service. The service provided via the broadband service network is referred to as the broadband network service or the broadband service.

In recent times, both traditional broadcast and web-based distribution paths have become are more and more converging. On the one hand, traditional web content services are providing broadcast of content on YouTube (registered trademark). On the other hand, traditional broadcast content providers offer so-called catch-up services, for example BBC (The British Broadcasting Corporation) iPlayer. The catch-up service is also referred to as the catch-up TV service.

These catch-up services offer a non-linear access to broadcast TV content in the Internet. Typically, catch-up services provide free-of-charge access to archived content during a predetermined period of time, for example, all broadcast content of the last seven days. Pre-TV (i.e. future) content might be available at the catch-up service. The pre-TV content is sometimes a charged service. In other words, the catch-up services provide not only the content that has been broadcast but missed, but also various contents such as content that has not been broadcast yet.

Current catch-up services offer Personal Computer (PC)-based access to the broadcast content using a streaming and/or download distribution mechanism.

One of the major content users' (consumers') accesses from catch-up services is episodes of popular TV series.

Episodes can be part of a larger story, stretched out over a time period covering one or more seasons or even an entire series run. This is especially prevalent in drama television series, including soap operas or science fiction series. An important characteristic of such content is that a story continues to evolve from episode to episode. This potentially leads to the consumer's wish not to miss an episode and to watch the episodes in sequence as far as possible.

Current catch-up services are mainly accessed using a personal computer (PC), which is typically equipped with a service network interface (also referred to service interface or network interface) that allows connecting to the Internet. In addition, PC may also be equipped with a broadband service network interface (also referred to as broadband service interface, broadband network interface or broadband interface).

Recently, consumer electronic (CE) devices are also being equipped with broadband network interfaces. For example, current digital television sets (DTV) may comprise a broadcast interface, such as based on satellite, cable or terrestrial broadcast technologies, and additionally a broadband service network interface. The broadcast interface allows the reception of broadcast information and programs, while the broadband interface allows connection to the Internet, or more generally to a service network.

Alternatively, a DTV may be solely equipped with a service network interface. In this case, the single interface is used for both receiving broadcast information and programs, for instance based on an Internet Protocol TeleVision (IPTV) technology, and connecting to the Internet or other network services.

An example of an IPTV-based application is the VIERA CAST (registered trademark) system recently developed by Panasonic Corporation. VIERA CAST (registered trademark) system provides access to catch-up services via TV devices that are equipped with a network interface connecting to the Internet.

Another recent development in audio-visual consumer electronics are electronic program guides (EPG). EPG provide information with respect to scheduled broadcast television or radio programs. The information is typically displayed on the TV screen, with various navigation functions.

On the one hand, EPG provide information that has been conventionally made available through program journals printed on paper, but also implies additional functions such as scheduling of content or future recording by a digital video recorder (DVR) or a personal video recorder (PVR). EPG on-screen information may be delivered by a dedicated channel or assembled by the receiving equipment from information sent by each program channel, for instance during the vertical blanking period.

Typically, additionally delivered broadcast-related information includes information or metadata about broadcast content. The information may relate to the currently broadcasted content, or may even relate to content that is scheduled to be broadcast in the future. The EPG is generated in receiving devices therefrom.

Traditionally, the EPG is solely based on broadcast signaling information. However, recent developments in the field of EPG also include information about content available from broadband services such as catch-up services.

The EPG may also be utilized for generating recommendations of content to a user. Therefore, the EPG may allow a user to mark broadcast programs of interest for notifying a user when the contents are actually broadcast.

Another type of content recommendation system is available in typical web content services such as YouTube (registered trademark). Based on selected or watched content, potentially related content is recommended.

Note that Japanese Unexamined Patent Application Publication 2007-116367 and Japanese Unexamined Patent Application Publication 2005-348153 and others disclose methods for recommending content.

A common characteristic of both, the typical broadcast content related and the typical web content related, examples is that there is only a recommendation of content from the same source. In other words, broadcast content is recommended based on information about broadcast content, and network service based content is recommended based on information about network service based content.

Enabling direct access from the devices that are typically used to consume broadcast content to network services providing broadcast-related content, such as previously described catch-up services, is very convenient for the users. This allows transparent access to TV content regardless of whether it is received through broadcast or service networks.

Integrated platforms such as the IPTV described above allow utilization of a common user interface for accessing the content, for instance TV display and remote control. Utilization of a well-known user interface provides a particularly convenient access for non-PC savvy-users to broadband services such as the catch-up service.

Patent document US 2007/0154163 describes the creation of "aggregations of episodes of series" that are programmed for recording in a TV system. Options to record episodes of series are described (including episodes broadcast in the past, "currently" and in the future). The collection of episodes to be recorded is called a "series aggregation." On a particular screen, more information about the series aggregation is shown. The screen opens upon the user's request. A particular episode of the series aggregation is highlighted, in order to add further information regarding the episode indicated on a separate screen window.

### [Summary of Invention]

### [Technical Problem]

However, simply just transferring current PC-based operation to a CE device such as DTV is not appropriate. Typically accessing content from a network service, a user starts navigating from a main page or top page. For example, this may be the main page of a broadcaster's catch-up offer, such as BBC's iPlayer. Then a user needs to select a content category typically followed by a sub-category and even sub-sub-category and so on.

For example, to access an episode of a favorite TV series, the user first needs to select the series category, within which he needs to select the actual series. Then he may need to select a season and finally choose the actually desired episode. The entire operation required is complicated and does not really match the intuitive operation of CE devices in several points.

On the one hand, such a kind of web-like navigation might be inconvenient and time consuming when taking into account the typically limited user interfaces of CE devices, for example a remote control of DTVs. On the other hand, a user experience to be typically expected from CE devices might be to get instant access to desired content, for example selecting a broadcast channel or selecting a program from the EPG.

A promising solution in this context is the provision of automatic content recommendations. Thereby, on the one hand, it is possible to provide a convenient user interface suited for CE devices, for example selecting appropriate content from a simple list of recommended content items. On the other hand, instant access to desired content is enabled.

As described above, typically conventional recommendation mechanisms are bound to a certain domain, for instance to service network or broadcast. However, it is desirable, for example, when watching an episode of a series, to have a related content recommended, for instance, a past episode from a catch-up service. Therefore, a cross-domain recommendation is required in order to recommend content from network-based services based on information about broadcast content.

It is a drawback of conventional recommendation mechanisms that the recommendation timing is not adapted to cross-domain recommendation. In typical web services, content recommendations are instantly adapted or changed when the user selects a content item. In another typical example, related content is recommended instantly after consumption of a content item is finished. Considering the case of DTV and catch-up service, both options might lead to undesired results.

For example, in the case of a user who is watching an episode of TV series and has missed one or more previous episodes, he would benefit from a recommendation of these past episodes available via catch-up service. On the other hand, he would not benefit if the content was to be recommended after the current episode only. In the other case when a user has not missed any previous episode, an instant recommendation of past episodes might be annoying to the user. However, a recommendation of available future episodes might be of great interest after the user has consumed the current one.

The present invention aims to provide a content recommendation system and method that recommend appropriate content with an appropriate timing.

### [Solution to Problem]

This is achieved by the features of the independent claims.

With this, the recommendation timing is determined based on the chronological relationship. Thus, appropriate content is recommended with an appropriate timing.

In addition, the recommendation timing determining unit may determine the recommendation timing to be a point in time after the user viewed the third content, when the recommended content is chronologically after the third content.

With this, the recommended content chronologically after target content is recommended after the target content is viewed.

In addition, the recommendation timing determining unit may determine the recommendation timing to be a point in time between the present and a point in time when the third content becomes available, when the third content will be available in the future and the recommended content is chronologically before the third content.

With this, the recommended content chronologically before a target content is recommended before the target content is viewed.

In addition, the recommendation timing determining unit may determine the recommendation timing as the present, when the third content is available and the recommended content is chronologically before the third content.

With this, the recommended content chronologically before the content that is currently being viewed is immediately recommended.

In addition, the content recommendation device may further include a viewing history holding unit which holds information of the first content as a viewing history, in which the recommended content determining unit determines, with reference to the viewing history, the second content that is not viewed as the recommended content.

With this, the recommended content is determined based on the viewing history. Thus, the recommended content more suited for the user's needs is determined.

For example, the viewing history may include information related to a program that has been viewed, or that has been viewed by the user through a terminal device. The viewing history may be used for optimum selecting of the content to be recommended to a specific user. More specifically, the viewing history may include the information about a user who has viewed a certain episode of a series that has been broadcast but has not viewed (missed) other episodes of the series.

Preferably, the viewing history holding unit holds one viewing history for one terminal device. When the terminal device is usually used by the same user or a user group such as family members, the appropriate recommended content is determined using one viewing history.

Furthermore, preferably, the viewing history holding unit holds one viewing history for each user. In this case, the content recommendation device may obtain additional information regarding the current user who is viewing the content. Furthermore, the viewing history holding unit may hold the viewing history in which the device-based history and the user-based history are mixed. For example, a shared history may be used when no user is identified, and an individual history may also be used when the current user is identified.

More preferably, the recommendation timing determining unit determines the recommendation timing in consideration of the viewing history.

For example, when the user is currently viewing an episode of a series but has missed the previous episode, the content recommendation device can recommend the previous episode when the current episode starts. As such, the user can switch to downloading from viewing the current episode via broadcast, and can obtain episodes in the past from the catch-up service. As a result, even if the user has missed a specific episode or a few episodes, the user can view the episodes in the correct order.

On the other hand, there are cases where it would be better to delay the recommendation until a certain point in time such as when the broadcast program ends, so that the user would not be interrupted or annoyed because of the operations performed contradicting to his wishes. Thus, the preferable, or suitable recommendation timing is during the viewing of the current program (for example, beginning) or after the viewing.

More preferably, the recommendation timing determining unit considers the information related to the recommended content itself. For example, when the recommended content is not chronologically related to the current content that is being viewed, the recommendation timing determining unit may generally determine that the recommendation is only presented after the content is viewed, so that the user is not interrupted.

In addition, the content recommendation device may further include a current content information obtaining unit which obtains current content information which is the information of the first content, in which the current content information obtaining unit may update the viewing history with the obtained current content information.

This updates the viewing history based on the current content information.

In addition, the content recommendation device may further include a current content information obtaining unit which obtains the current content information which is the information of the first content that is currently being viewed by the user, in which the recommended content determining unit may determine, using the current content information obtained by the current content information obtaining unit, the second content as the recommended content, the second content being related to the first content that is currently viewed by the user, and the recommendation timing determining unit may determine the recommendation timing, using the current content information obtained by the current content information obtaining unit, and based on the chronological relationship between the recommended content and the third content which is identical to the first content that is currently being viewed by the user.

With this, the recommended content is determined based on the information of the content that the user is currently viewing, and the recommendation timing is determined.

In addition, the recommended content determining unit may determine the second content as the recommended content, the second content being related to the first content that is at least partially viewed by the user when the first content is broadcast and being provided through a two-way communication, and the recommendation timing determining unit may determine the recommendation timing, based on the chronological relationship between the recommended content and the third content that is currently broadcast or will be broadcast.

With this, the content recommendation device according to the present invention can recommend the network-based content which is related to the broadcast content, such as web content beyond the areas as the recommended content.

Preferably, the recommended content is related to a catch-up service corresponding to the broadcast program that is currently viewed. More preferably, the recommended content can be downloaded from the service network or can be viewed by streaming.

In addition, the content recommendation device may further include an availability checking unit which checks an availability of the second content provided through the network, in which the recommended content determining unit may determine the recommended content, based on the availability.

With this, the recommended content is determined according to the availability. Thus, more suitable content is determined as the recommended content.

According to a preferable embodiment, only the content that is actually available to the user with ease is recommended. More preferably, the content is recommended to the user only when the content is available free of charge (FoC) on the service network. Furthermore, the recommendation information which is presented to the user additionally indicates a period of time when the recommended program is available FoC, or a charge (subject to change) for viewing the program in a specific period.

In addition, the recommended content determining unit may determine the second content as the recommended content, the second content being confirmed, by the availability checking unit, as available through the network and being not viewed.

With this, the content which is available and not viewed is determined as the recommended content. Thus, more suitable content is determined as the recommended content.

Furthermore, preferably, the current content information obtaining unit periodically, or on a temporary basis, updates the viewing history, based on the obtained information. The recommended content determining unit then determines the content that is not viewed as the recommended content, based on the viewing history.

In addition, the content recommendation device may further include a user generated content searching unit which searches for user generated content, in which the recommended content determining unit may further determine the user generated content as the recommended content, when the user generated content searched by the user generated content searching unit is related to the first content.

With this, the recommended content is determined in a broader range. Thus, more suitable content is determined as the recommended content.

Furthermore, preferably, content recommendation based on the local unit (for example, local hard disk drive (HDD) is included in the content to be determined by the recommended content determining unit for recommendation.

In addition, the content recommendation device may further include: a content storage unit which stores content as local content; and a content storage control unit which stores, in the content storage unit, the third content as the local content when the user views the recommended content.

With this, it is possible to store the target content that would be unavailable because the user views the recommended content.

In addition, the content recommendation device may further include: a content storage unit which stores content as local content; and a local content searching unit which searches the local content stored in the content storage unit, in which the recommended content determining unit may further determine the local content as the recommended content when the local content searched by the local content searching unit is related to the first content.

With this, the stored content may be determined as the recommended content. Therefore, the recommended content is determined from a broader range.

In addition, the recommended content determining unit may not determine the second content as the recommended content after the second content recommended as the recommended content to the user is not viewed by the user.

With this, the content recommendation device according to the present invention can prevent the content that the user is not interested in from being repeatedly recommended.

In addition, the content recommendation device may further include a display which displays information of the recommended content with the recommendation timing.

With this, the information of the recommended content is displayed. Therefore, the user can access the desired content more easily.

According to a preferable embodiment, the content recommendation device according to the present invention is included in a single terminal device. A preferable example of the terminal that can include the content recommendation device according to the present invention is a TV service (digital television set (DTV), digital video recorder (DVR), or personal video recorder (PVR). These embodiments provide compact solutions adjustable to the requirements of specific home appliance.

Alternatively, the content recommendation device according to the present invention may be implemented as a set top box (STB).

The content recommendation device may be implemented as a content recommendation system. Subsequently, the appropriate content is recommended with an appropriate timing through cooperation of the devices.

Furthermore, the components of the content recommendation system according to the present invention is dispersed to a terminal device for the user, and a specific server (CE server) which serves as a proxy server between the network services such as the catch-up service and the terminal device. The search and determining recommendation are simplified if the process is server-based, facilitating the implementation of the terminal device.

According to the invention, the recommendation timing is determined based on the chronological relationship. Thus, appropriate content is recommended with an appropriate timing.

Furthermore, the program according to the present invention may be a program causing a computer to execute the steps included in the content recommendation method.

With this, the content recommendation method is implemented as a program.

For example, the content recommendation method may be implemented as a computer product including a computer-readable medium in which a computer-readable program codes are implemented. When loaded into a computer, the program codes cause the computer to execute the steps included in the content recommendation method according to the present invention.

The content recommendation device may be implemented as an integrated circuit.

### [Advantageous Effects of Invention]

According to the present invention, the appropriate content is recommended with an appropriate timing. Thus, complexity in operations for finding desired content is reduced.

### [Brief Description of Drawings]

[FIG. 1] FIG. 1 illustrates the high-level system architecture of an exemplary embodiment of a system that provides catch-up service.
[FIG. 2] FIG. 2 illustrates the high-level system architecture of a variation embodiment of a system that provides catch-up service.
[FIG. 3] FIG. 3 illustrates an overview over the components of a content recommendation device according to the embodiment of the present invention.
[FIG. 4] FIG. 4 is a flowchart illustrating an exemplary procedure for generating a viewing history according to an embodiment of the present invention.
[FIG. 5] FIG. 5 is a flowchart illustrating an exemplary procedure for triggering generation of content recommendations according to an embodiment of the present invention
[FIG. 6] FIG. 6 is a flowchart illustrating by the recommendation timing determining unit according to an embodiment of the present invention.
[FIG. 7] FIG. 7 is a flowchart illustrating a basic procedure for judgment of recommendation time for content recommendation timing determining unit according to an embodiment of the present invention.
[FIG. 8] FIG. 8 illustrates an overview over the components of a content recommendation device according to a variation of the embodiment of the present invention.
[FIG. 9] FIG. 9 illustrates an overview over the components of a content recommendation device according to the embodiment of the present invention.
[FIG. 10] FIG. 10 is a flowchart illustrating basic procedure for content recommendation device according to the embodiment of the present invention.
[FIG. 11] FIG. 11 illustrates an overview over the system components of a content recommendation system according to the embodiment of the present invention.
[FIG. 12] FIG. 12 illustrates an overview over the system components of an integrated circuit according to the embodiment of the present invention.
[FIG. 13A] FIG. 13A illustrates a first display example according to the embodiment of the present invention.
[FIG. 13B] FIG. 13B illustrates a second display example according to the embodiment of the present invention.

### [Description of Embodiments]

The following describes an exemplary embodiment of the present invention, with reference to the drawings.

The present invention provides a content recommendation device equipped in a consumer electronics device such as a TV receiver. The consumer electronics device has access to both broadcast content and content received via a service network. The consumer electronics device provides cross-domain recommendation architecture by accessing both of the content. A typical example for such system architecture is the provision of content by so-called catch-up services. More specifically, the recommended content is content that were provided via a service network, preferably, a broadband network, for a certain limited time period after broadcast.

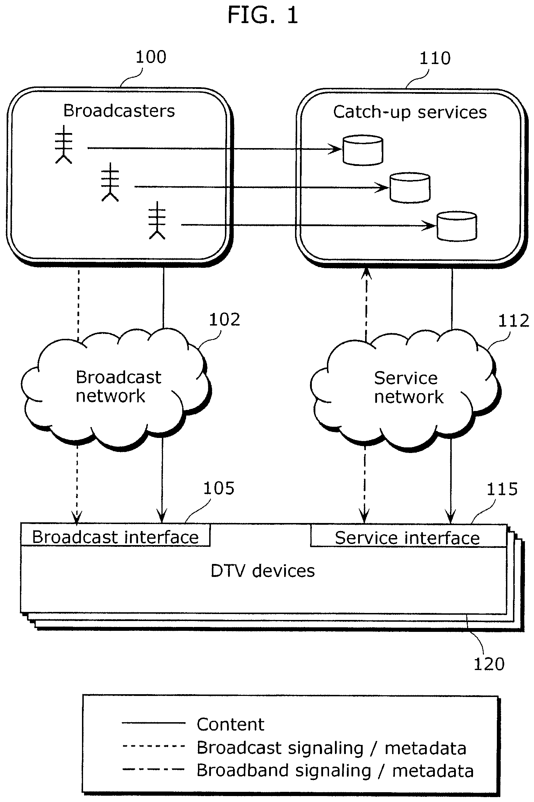

FIG. 1 illustrates an exemplary embodiment of key elements of a service architecture that is used within the framework of catch-up service.

Broadcasters 100, on the one hand, provide their content via traditional broadcasting means 102 in a linear fashion, for instance, based on satellite or cable or terrestrial technologies. On the other hand, they may, in addition, provide access to their content, or a subset thereof, via catch-up services 110 in a non-linear fashion.

Currently, each of the major broadcasters, like BBC or Arbeitsgemeinschaft der offentlich-rechtlichen Rundfunkanstalten der bundesrepublik Deutschland (ARD) or Radio Television Luxembourg (RTL) provides an individual catch-up service 110.

However, it is also possible that one or more broadcasters in the broadcasters 100 offer a joint catch-up service 110, comprising content from all participating broadcasters 100. Furthermore, also other, non-broadcast content providers can possibly participate in such a catch-up service 110. A different further possibility is that a catch-up service 110 is offered from a content aggregator, who typically does not own any content by himself.

The DTV devices 120 illustrated in FIG. 1 are components for receiving the content, and is used by a user. As shown in FIG. 1, DTV devices 120 are equipped with a broadcast interface 105 and a service interface 115. Preferably, the service interface 115 is a broadband interface.

The broadcast interface 105 connects to a broadcast network 102, which usually provides a unidirectional communication (downlink) only. Typical examples of broadcast networks 102 are satellite, cable or terrestrial TV systems. The broadcast networks 102 are preferably based on digital TV standards like those provided by the Digital Video Broadcasting (DVB) family of standards. On the broadcast interface 105, the DTV devices 120 may receive broadcast related signaling and of course, the broadcasted content.

The service interface 115 connects to a service network 112. The service interface 112 typically provides a bi-directional communication (downlink and uplink). Preferably, the service network 112 is a broadband network. In addition, it is also preferable that the service network 112 provides IP-based service access. The service network 112 and the service interface 115 can be based on standards for fixed broadband networks, such as, DSL.

Alternatively, they may be based on mobile broadband networks, for example, like Worldwide Interoperability for Microwave Access (WiMAX). On the service interface, the DTV devices may send and receive signaling related to broadband services and may receive distributed content.

As already outlined above, in accordance with an alternative embodiment, DTV devices 120 may be solely equipped with a service network interface 115. Connecting to a broadband network via the service interface 115, on the one hand, the DTV devices 120 may send and receive broadcast content related signaling and the respective content. On the other hand, the devices may send and receive service content related signaling and content.

Such an alternative is typically implemented by services provided by telecommunications operators, more specifically, their IPTV-service offers. The distribution of broadcast content is usually based on multicast mechanism, while the distribution of service content such as catch-up services 110 typically utilizes point-to-point mechanisms like streaming or download.

As illustrated in FIG. 1, typically, the terminal devices such as DTV devices 120 directly receive and process the signaling included in the broadcast streams. From the received information, the terminal devices usually generate broadcast Electronic Program Guides (EPG).

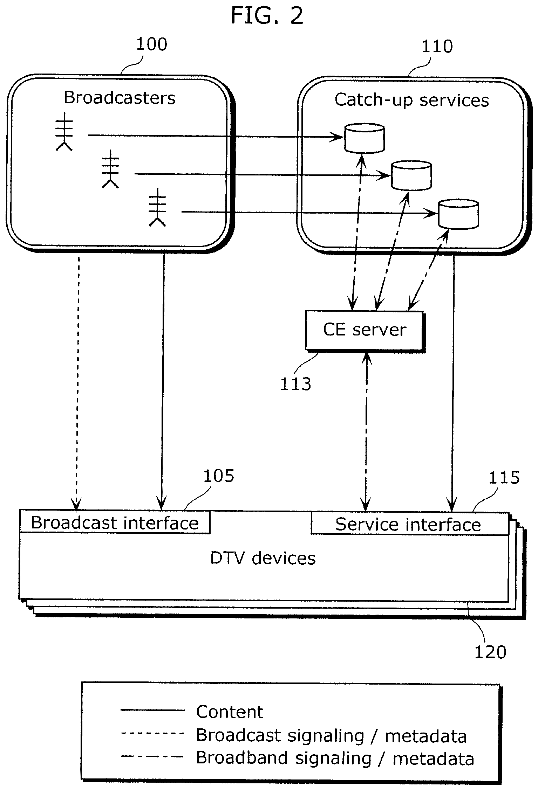

An alternative embodiment of the system illustrated in FIG. 1 is illustrated in FIG. 2. The system illustrated in FIG. 2 provides a service based on the mix of the broadcast network 102 and the service network 112, in the same manner as the system illustrated in FIG. 1. The system illustrated in FIG. 2 is based on the basic system illustrated in FIG. 1 and more advanced system architecture.

In addition to the broadcast content providers 100, the respective broadband services 110 and the DTV devices 120, as described in connection with FIG. 1, a new element, the so-called "CE-server" 113 is depicted in FIG. 2. One of the main functionalities of the CE server 113 is to collect information about available content from broadband services 110 and to process respective metadata. The information is provided from the CE server to a terminal device, such as a DTV device 120, wherein it is integrated with the broadcast EPG.

Please note that FIG. 2 does not illustrate the infrastructure components of broadcast and service networks, labeled 102 and 112 in FIG. 1, for sake of simplicity.

Allocating some or all of the functions described above to the CE server 113, i.e. an element outside the terminal device 120, has several benefits. On the one hand, broadband service discovery is simplified utilizing a server-based mechanism. For example, the DTV terminal devices 120 may always access a single (i.e. always the same) predefined server URL connecting to the CE server 113. The CE server 113 may hold newly edited or changed broadband services maintained at the CE server 113, for instance, utilizing a simple list of URLs. On the other hand, also terminal device implementation is simplified.

For example, information about service content exchanged between the CE server 113 and the terminal devices 120 may be encoded in a single (terminal-friendly) format. In the event that the CE server 113 is capable of retrieving information encoded in different formats from different services, it is capable of changing it to a common format, for instance, utilizing a transcoding function.

The system architecture depicted in FIG. 2 may be called "hybrid". This is because information about broadcast content is retrieved and processed at the terminal device 120, while information about service content is retrieved and processed at a separate device, such as CE server 113.

It is emphasized that other system architecture options are possible for implementing the system architecture according to the present invention. On the one hand, in a terminal-centric architecture (c.f. FIG. 1), by its direct access to the catch-up services 110, the DTV device 120 retrieves information about available content and integrates it with broadcast EPG. On the other hand, in a server-centric architecture illustrated in FIG. 2, an element like the CE server 113 can be responsible for collecting and processing both, the content information and the broadcast content information provided by the catch-up service 110. The CE server 113 integrates the information to generate EPG, and delivers the already integrated EPG to the DTV devices 120.

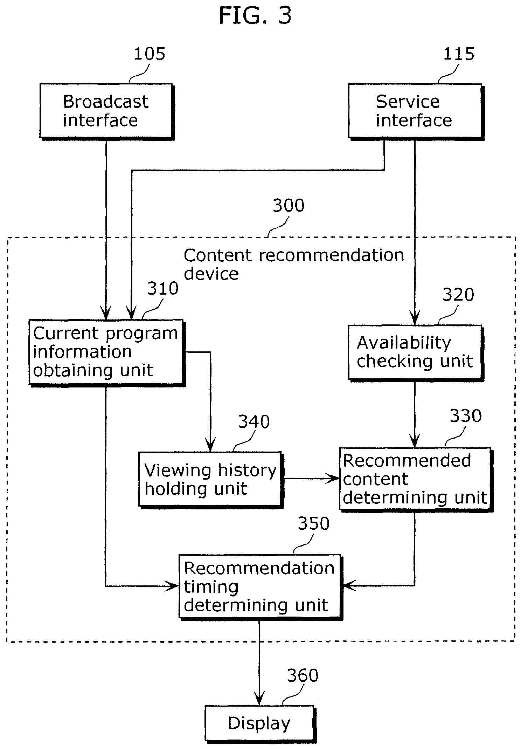

FIG. 3 illustrates an overview over the main functional components of a content recommendation device according to an embodiment of the present invention. The content recommendation device 300 illustrated in FIG. 3 includes a current content information obtaining unit 310, a availability checking unit 320, a program recommendation unit 330, a viewing history holding unit 340, and a recommendation timing determining unit 350. In addition, the broadcast interface 105 and the service interface 115 may be included. A display 360 may also be included.

It is generally noted that the components may be included in a single terminal device established at the consumer's premises, such as a DTV-device 120, or alternatively, DVD recorder, personal video recorder or set-top box, or another kind of terminal device. The invention is not limited to the case of including all the illustrated components into a single terminal device, but they may also be distributed over several devices. For instance, some of the illustrated functional units can be included in a centralized component, such as a CE server 113 as described above.

Generally, the content recommendation device 300 is provided with both broadcast interface 105 and a service interface 115. It is however noted that, as indicated above, in accordance with a particular alternative embodiment, no broadcast interface is provided, and broadcast contents are also available via service interface 115.

A first functional unit, connected to both external interfaces, is the current content information obtaining unit 310. The main purpose of the current content information obtaining unit 310 is to retrieve information related to currently consumed broadcast content.

At a minimum, the collected metadata include the content title. A large variety of additional information might also be comprised. For instance, information identifying a content item may be included. Besides the title, a typical example is a content identifier, like an alpha-numeric code that may uniquely identify the content item. Such an identifier can also be used to address content information inside an EPG application. Further, the information may indicate relationships to other content items.

A typical example is a series consisting of several episodes. An episode number, defines the consumed contents position in relation to other episodes of the same series. Furthermore, collected metadata may include detailed information about the content like genre, actors, director or some short description. Also, the current content information obtaining unit 310 may retrieve information like content length, current broadcast channel, and/or broadcast schedule.

Optionally, the current content information obtaining unit 310 may retrieve the data from signaling information included in the received broadcast stream. For example, the current content information obtaining unit 310 may retrieve the information can be provided using service information as standardized in DVB (DVB-SI). According to another option, the current content information obtaining unit 310 retrieves the data from the service network via service interface 115.

A typical example is that the broadcaster 100, in addition to distributing the content via the broadband network, offers information about the currently broadcasted content from a broadband service, for instance, a web page. Another typical example of a broadband service offering information about broadcast content may be a third party EPG provider. Typically, the information retrieved from these broadband services is encoded using Extended Markup Language (XML), but also other encodings are possible. The current content information obtaining unit 310 retrieves information about the current broadcast content provided by the broadcaster 100 or the EPG provider.

In addition, the current content information obtaining unit 310 may utilize both broadcast information in combination with service network information, to obtain the information about the content that is currently being broadcast. So, partly information is retrieved from signaling information included in the received broadcast stream and partly from network services such as broadband services. The information collected from the different networks may be overlapping and/or complementing each other.

The current content information obtaining unit 310 may change or adapt the information to a suitable form for additional functional components for collecting information. The current content information obtaining unit 310 might, on the one hand, refer to the encoding of the information, for example, changing information encoded in different formats to a common format. On the other hand, this may refer to generating a subset of collected information. One example of another functional component for the information is EPG applications. In the context of the present invention, the current content information obtaining unit 310 provides the information to a component generating a viewing history, which will be described in more detail below.

A further component directly connected to service interface 115 is the availability checking unit 320. The main purpose of the availability checking unit 320 is to obtain availability information of a content item from the service network (preferably a broadband network).

Therefore, the availability checking unit 320 is provided with information about the requested content item, for example, a title or other content identifier. Typically, also content source associated with the content item in question, is provided as input to the availability checking unit 320. The content source can be identified by a broadband service URL. The URL may be directly provided to the availability checking unit 320 or optionally it may be derived from other information like a broadcast channel identifier.

A particular example of a content to be checked for availability is a TV program that has been previously broadcasted and is possibly available for download or streaming via a catch-up service 110. However, the content availability check is not limited to a catch-up service 110. Generally, the availability checking unit 320 as described herein may therefore also be called a program availability checking unit or a content availability checking unit.

The availability checking unit 320 retrieves availability information from the content source based on the content identifier. The availability information preferably comprises an availability status, and if applicable, can further comprise information required to retrieve content from a broadband service, such as a URL.

The availability status may provide more detailed information on how the content item can be retrieved. For example, if the content item is not yet broadcasted, access to it may be charged. On the contrary, if the content item was already broadcasted, it may be accessed free of charge. Of course, there may be the case where a requested content item is not available from a broadband service. Also, a time period during which content is available on catch-up service free of charge, is often limited.

Typically, the availability information retrieved from broadband services is encoded using XML, but other encodings are possible as well. Additionally, a preferred function of the availability checking unit 320 is to change or adapt the obtained information to a suitable form to be used in other functional components.

The main purpose of the viewing history holding unit 340 is to maintain a content viewing history. Information comprised in the viewing history holding unit 340 can be updated based on information provided from the current content information obtaining unit 310. Therefore, a direct connection between the current content information obtaining unit 310 and the viewing history holding unit 340 is provided.

The viewing history holding unit 340 analyzes the collected information regarding interrelationships of different content items. A typical example of such a relationship is individual episodes belonging to a television series. Therefore, the viewing history holding unit 340 is capable of directly using information provided from the current content information obtaining unit 310, such as title and episode number. Alternatively, the viewing history holding unit 340 may need to identify related content items by itself, for instance, based on content identifier information provided from the current content information obtaining unit 310.

Typically, the viewing history holding unit 340 maintains a single viewing history for a terminal device. However, the terminal device may be utilized by different users. A typical example is a single DTV device 120 used by all members of a family. Hence, another option is that viewing history holding unit 340 maintains a viewing history for the individual user. In such a case, the viewing history holding unit 340 may additionally require information about the current user consuming the content items. A further option for the viewing history holding unit 340 is to hold a mixture of those device-based and user-based histories. For example, there might be common history in case no user is identified, but if a current user is known, an individual history is maintained.

The viewing history data is maintained in the viewing history holding unit 340 using the storage system like a database. From the viewing history holding unit 340, viewing history information is provided to other functional components.

Alternatively, the viewing history holding unit 340 may provide an interface, for instance, like an Application Programming Interface (API), allowing other components to query viewing history conditions used, depending on the query. For example, it is possible query on the viewing history holding unit 340 whether a sequential number of episodes of a television series have been watched or some episodes are missing. It is possible to notify the viewing history holding unit 340 of the content information to update the viewing history.

The main purpose of the recommended content determining unit 330 is to generate a recommendation of content items from a service network that might be of interest for a user. In other words, the recommended content determining unit 330 determines the recommended content. As one key characteristic, this recommendation may be based on a viewing history of broadcast content items used for detecting the content interest of a user. A typical example is that a user watches episodes of a series.

From viewing history information holding unit 340, recommended content determining unit 330 may detect that a user has watched episodes no. 1, 2 and 4, for example. In this example, the recommended content determining unit 330 may detect a user's interest in this series. Therefore, the recommended content determining unit 330 may generate a recommendation for episodes of this series. The recommended content determining unit 330 may include episode 3, which the user obviously missed, and episode 5, which might be the most recent one.

Furthermore, the recommended content determining unit 330 may include another content starring an actor in the series.

For obtaining the viewing history information, the recommended content determining unit 330 is connected to the viewing history holding unit 340. The recommended content determining unit 330 may obtain the information regarding the content that is currently viewed or the content that has been viewed, from the current content information obtaining unit 310. The recommended content determining unit 330 may subsequently determine the recommended content based on the information obtained by the current content information obtaining unit 310.

Another key factor or the recommendation generated by the recommended content determining unit 330 is the content availability from the service network 112. Although a content item may be of interest for a user from the viewing history point of view, it may not be included in the content recommendation, as long as it is not available from the broadband network. In the above example case, episodes 3 or 5 may only be recommended if they would be available from the network content service, such as a catch-up service 110.

The recommended content determining unit 330 is connected to the availability checking unit 320 to obtain the content availability information.

There are several options when the recommended content determining unit 330 generates a content recommendation. One possibility is that the generation of a recommendation by the recommended content determining unit 330 is based on a time interval. Typically, such an option is realized using a timer inside the recommended content determining unit 330. Thereby, the recommendation may be regularly updated.

According to another option, the generation of the recommendation by the recommended content determining unit 330 may be triggered by an event outside the recommended content determining unit 330. User interaction can be one possible event.

For example, the user operates the user interface, for instance, by pressing a function key on the remote control or opening the EPG to trigger the determination of the recommended content by the recommended content determining unit 330. Other event options can be updates of the viewing history or changes in availability of content items from the service network 112 to trigger the determination of the recommended content by the recommended content determining unit 330.

Accordingly, generation of program recommendation can be triggered by the viewing history holding unit 340 or the availability checking unit 320.

An essential component of system architecture of the content recommendation device 300 according to the present invention is recommendation timing determining unit 350. The main purpose of the recommendation timing determining unit 350 is to provide optimized content recommendations that are matching the user's requirements. Therefore, the recommendation timing determining unit 350 adapts a recommendation of broadband content items generated by the recommended content determining unit 330, taking into account information relating to currently consumed broadcast content.

The recommendation timing determining unit 350 obtains the information relating to currently consumed broadcast content from the current content information obtaining unit 310. Additionally, the recommendation timing determining unit 350 may further take into account information regarding the viewing history held in the viewing history holding unit 340, and information about the program/content to be recommended from the recommended content determining unit 330.

One aspect of the targeted optimization is to decide optimized timing when to provide a recommendation of possibly interesting broadband content items to the user. Simply providing a content recommendation all the time, when some state (for instance, viewing history or content availability) has changed, might be annoying to the user. Depending on the currently consumed broadcast content, and the generated service network content recommendation, sometimes it might be beneficial to instantly provide a recommendation to the user, whereas sometimes it might be beneficial to postpone this after consumption of the current broadcast content has been finished.

Another aspect of the targeted optimization may be to optimize the list of content items included in the presented recommendation. Simply including all related items (for instance, all available episodes of a television series) might be annoying to the user. Depending on the currently consumed broadcast content and the optimized timing for providing the recommendation to the user, it might be beneficial to limit the included broadband content items to a small number of closely related ones.

A typical example is as follows: assume that a user is watching a series. In the past, he or she might have watched episodes 1 and 2, which may lead the recommended content determining unit 330, to generate a recommendation including episodes 1, 2 and 3 (assuming all are available from a broadband content service). In the event the user is currently watching episode 4 from broadcast, it may be beneficial to instantly recommend episode 3, which the user obviously missed. The user may decide to watch this episode first, in order to catch up with the story line.

In another example case, the user is currently watching episode 3. Here, it might be annoying to the user to get recommendations for episode 2. However, it might be beneficial to recommend episode 4, right after watching of episode 3 has finished.

The recommended content determining unit 330 causes the display 360 to display the information regarding the recommended contents at the recommended timing. The display 360 displays the information regarding the recommended content at the recommended timing.

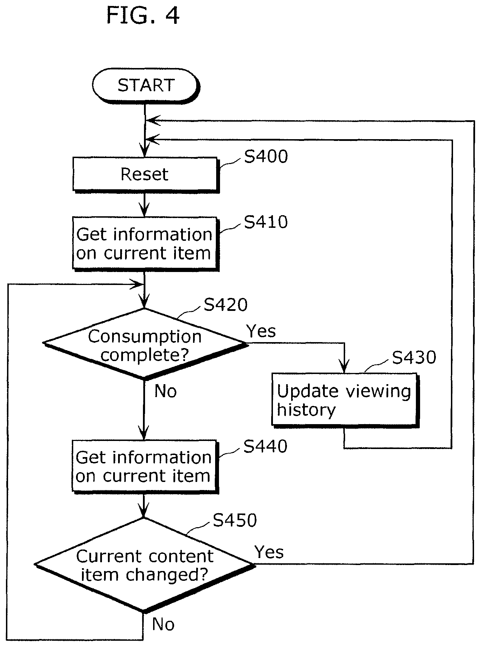

In the following, exemplary operation schemes of the content recommendation device 300 described with reference to FIG. 3 will be explained with reference to the flow charts of FIG. 4 to 7. It is noted that the following operation schemes are given by way of example only. The invention or the embodiments thereof are not limited to the examples described.

FIG. 4 exemplifies a procedure for generating a viewing history. The procedure may involve the functional components of the current content information obtaining unit 310 and viewing history holding unit 340.

The viewing history can be updated each time a content item has been completely consumed. Two variables can be used to detect this condition. One variable is used to store information regarding the currently consumed content item (curr_item). Another variable is used to store information about the time the current content item has been consumed (curr_time).

First, the variables are reset or cleared by the current content information obtaining unit 310 (S400).

In next step, information about the currently consumed content is obtained, for instance, utilizing the functional component of the current content information obtaining unit 310 (S410). The current content information obtaining unit 310 stores the information in the variable curr_item. Typically, such a variable does not store the entire information set, by the current content information obtaining unit 310, but rather comprises a reference or a pointer to such a data structure.

In next step, the current content information obtaining unit 310 checks whether the current content item has been completely consumed (S420). This is achieved by comparing the curr_time variable with content length, which is, for instance, retrieved as part of the content information at the previous step (S410), for instance utilizing the current content information obtaining unit 310.

If it is detected that the complete content item has been consumed (S420: yes), the current content information obtaining unit 310 updates the viewing history with the information about the content item, for instance, utilizing the functional component viewing history holding unit 340 (S430). Typically, consumption of a content item might be considered complete by the current content information obtaining unit 310 when the time consuming the item is equal to the entire length of the content. Alternatively, completeness can be considered, by the current content information obtaining unit 310, to have been achieved when consumption reaches a time threshold or when the user manually marks the content as "seen". The threshold value may be an absolute value or relative to the content length.

In the case that it is detected that consumption of the content item is not yet complete (S420: no), the procedure by the current content information obtaining unit 310 enters a loop until either consumption is completed or the current content item is changed before completion (S420, S440, S450). In the latter case (S450: yes), the procedure by the current content information obtaining unit 310 may continue with checking the new content item after resetting the variable (S400).

Note that, although the viewing history is updated when the whole content is viewed, the viewing history may be updated when part of the content is viewed. For example, the viewing history holding unit 340 may hold the content information of the content that the user is viewing. The viewing history holding unit 340 may hold a flag for identifying whether the content is entirely viewed or partially viewed.

The recommended content determining unit 330 may determine the recommended content based on information regarding the content that the user is currently viewing, the content, the content that is partially viewed, and the content that is entirely viewed, for example.

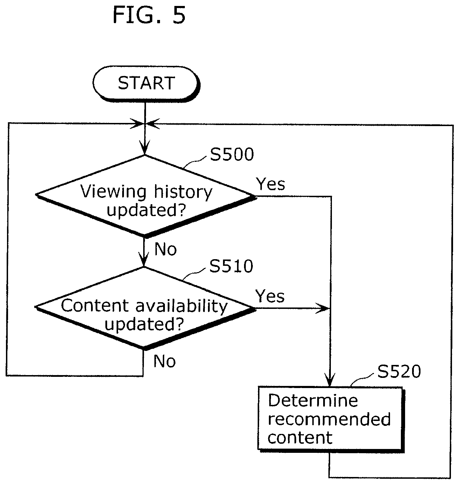

FIG. 5 exemplifies a procedure for triggering generation of broadband content recommendations. The procedure may involve the functional components viewing history holding unit 340, availability checking unit 320 and recommended content determining unit 330.

First, the recommended content determining unit 330 determines, by the viewing history holding unit 340, whether or not the viewing history is updated (S500). A typical example regarding updated viewing history is that a new content item is added, since the user has finished consuming respective broadcast content.

Subsequently, the recommended content determining unit 330 determines, by the availability checking unit 320 whether or not the availability of the content is changed (S510). A typical example regarding updated content availability may be that a content item becomes available from a network service such as a broadband service which was not available before.

When the viewing history is updated (S500: Yes), or when the content availability changes (S510: Yes), the recommended content determining unit 330 determines the recommended content (S520).

On the other hand, when the viewing history is not updated (S500: No), and when the content availability does not change (S510: No), the recommended content determining unit 330 repeats the above determining (S500 and S510).

With the process described above, the recommended content is determined every time the viewing history or the content availability changes. In this way, the generated content recommendation may always remain up-to-date regarding current viewing history and content availability conditions in the service network 112.

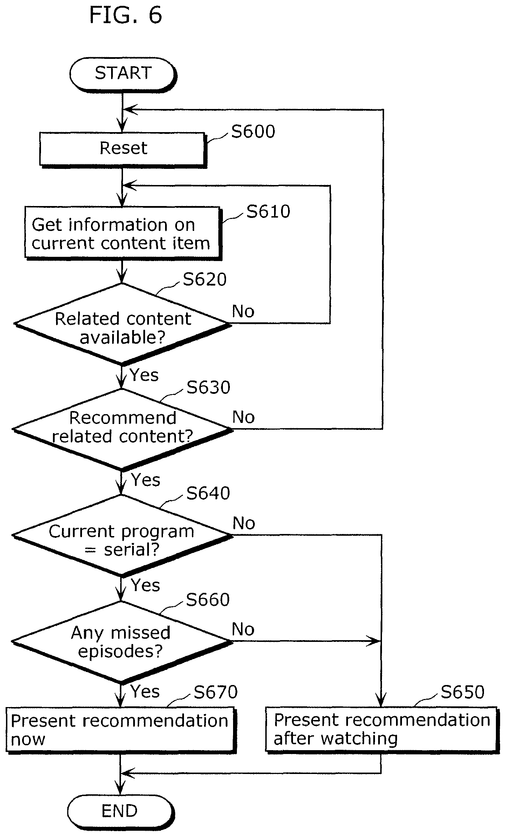

FIG. 6 illustrates an example of judging an appropriate time for presenting a recommendation to a user according to the present invention by the recommendation timing determining unit 350 illustrated in FIG. 3.

First, the system initializes and variables are reset as described above in connection with step S400 illustrated in FIG. 4 (S600).

In subsequent step, information about an item currently being watched is obtained, as described in connection with the description of the current content information obtaining unit 310 (S610).

In the following step, the availability checking unit 320 checks whether any related content is available on the service network 112, such as for instance via a catch-up service 110 (S620).

If any related content is available (S620: Yes), in subsequent step, the recommended content determining unit 330 determines whether the related content is suitable for being recommended to a user (S630).

If it is determined that the content is suitable (S630: Yes), the recommended content determining unit 330 determines to recommend the related content. In the subsequent steps, the recommended content determining unit 330 determines an appropriate time for recommending the related content to the user.

In an exemplary embodiment, the recommendation timing determining unit 350 further determines whether the currently viewed content is a part of a serial in step (S640).

In the case that the program currently being watched does not belong to a serial (S640: no), it is concluded that most likely the related content and the contents currently being watched may be consumed in either sequence. Consequently, in order not to annoy the user during watching the current program, recommendation timing determining unit 350 determines to present the recommendation only after watching (S650).

If alternatively it is determined that the currently viewed content belongs to a serial (S640: yes), the recommendation timing determining unit 350 further determines, based on the viewing history held in the viewing history holding unit 340, whether the user has missed any episodes that are included in the recommended content (S660).

If the user has missed any previous episodes, (S660: yes), the recommendation timing determining unit 350 determines to present a recommendation of the missed episode immediately (S670). In the contrary case (S660: no), the recommendation is presented after watching (S650).

Note that, in FIG. 6, the judging unit 350 determines the recommendation timing based on the order of the series. However, the recommendation timing determining unit 350 may determine the recommendation timing, based on the order of the sport programs about the preliminary rounds and the final. In this case, after the program including the preliminary rounds are consumed, the program including the final is recommended. In other words, the recommendation timing determining unit 350 may determine the recommendation timing not only based on a series, but also the chronological relationship of the content.

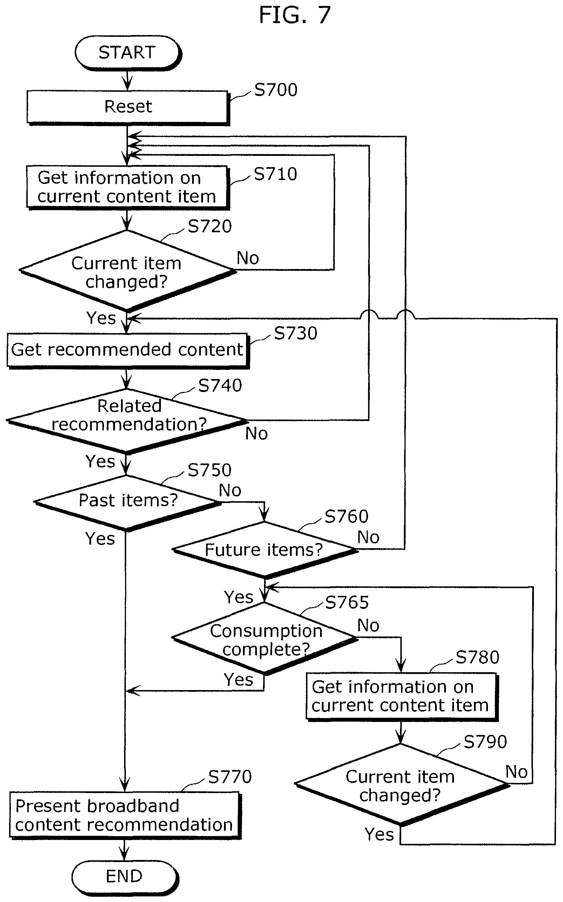

A more detailed example operation of the recommendation timing determining unit 350 is given in FIG. 7. Besides the recommendation timing determining unit 350, the illustrated procedure may also involve the current content information obtaining unit 310 and recommended content determining unit 330.

The recommendation of content items is optimized based on currently consumed broadcast content item information.

First, the recommendation timing determining unit 350 resets or clears the variable storing information regarding the currently consumed content item (curr_item) (S700).
Note that, as described above, the variable may be reset by the current content information obtaining unit 310. Alternatively, the recommendation timing determining unit 350 may reset the variable through the current content information obtaining unit 310.

In next step, information about the currently consumed content item is obtained by the recommendation timing determining unit 350, for instance, utilizing the current content information obtaining unit 310 (S710).

Next, the recommendation timing determining unit 350 judges whether or not the current content is changed (S720). For example, the recommendation timing determining unit 350 determines that the current content is changed if the information obtained by the current content information obtaining unit 310 and the information stored in the variable curr_item. Furthermore, the recommendation timing determining unit 350 determines that the current content is not changed if the information obtained by the current content information obtaining unit 310 and the information stored in the variable curr_item are identical.

Subsequently, the recommendation timing determining unit 350 stores, after the comparison, the information obtained by the current content information obtaining unit 310 into the variable curr_item. The recommendation timing determining unit 350 may store a reference or a pointer to the information into the variable curr_item, instead of the information itself.

When the current content is not changed (S720: No), the recommendation timing determining unit 350 obtains, by the current content information obtaining unit 310, the information regarding the current content again (S710). With this, the recommendation timing determining unit 350 holds the processing for the change in the current content.

In subsequent step, when the current content is changed (S720: Yes), the information of the recommended content is obtained by the recommendation timing determining unit 350, for instance, utilizing the recommended content determining unit 330 (S730).

In the next step, the recommendation timing determining unit 350 determines whether the recommendation or a subset thereof is related to the currently consumed broadcast content item (S740). This may be achieved by the recommendation timing determining unit 350 comparing information available from the curr_item variable with information contained in the content recommendation obtained.

In a typical example, the recommendation timing determining unit 350 compares the title of a current content item with the titles of content items contained in the recommendation to judge whether or not they are related. Of course there are several other options for the recommendation timing determining unit 350 to detect a relationship. For example, the recommendation timing determining unit 350 may judge whether or not they are related by utilizing content identifier information, channel identifier information or even combinations of different kinds of information. Note that the content included in the recommendation is preferably available from the service network 112.

In the case that no match is found, or that the recommended content is unavailable (S740: No), it may be concluded that there is no recommendation related to the currently consumed broadcast item. In this case, the procedure by the recommendation timing determining unit 350 may enter a loop until the consumed broadcast content item is changed (S720: yes) and a related content recommendation is available (S740: yes).

In the case that a match is found and is available (S740: yes), it is concluded that the recommendation is related. In a subsequent step, depending on the content of the recommendation in the currently consumed broadcast content item, an appropriate time for presenting the recommendation to the user is decided.

The recommendation timing determining unit 350 determines that the recommendation contains service content items that are chronologically related to the past compared to the current content item (S750). A typical example, already referred to above, is that the user is watching an episode of a television series and the recommendation contains a previously missed episode. In this option (S750: yes), the procedure by the recommendation timing determining unit 350 proceeds with instantly presenting content available on the service network ("broadband content") as a recommendation to the user.

In addition, the recommendation timing determining unit 350 judges whether or not the recommendation contains service network content items that are chronologically related to the future compared to the currently consumed broadcast content item (S760). A typical example is that the user is watching an episode of a television series, while the recommendation contains a future episode that may be available from the service network 112. In this case (S760: yes), presentation of the recommendation to the user may be deferred until consumption of the current broadcast content item is complete.

More specifically, in this case (S760: Yes), the recommendation timing determining unit 350 determines whether or not the consumption of the current broadcast content item is complete (S765). When the consumption is complete (S765: Yes), the recommendation timing determining unit 350 presents the information regarding the recommended content via the display 360 (S770).

On the other hand, when the viewing is not complete (S765: No), the recommendation timing determining unit 350 obtains, by the current content information obtaining unit 310, the information regarding the current content (S780). Next, the recommendation timing determining unit 350 determines whether or not the current content is changed (S790). Here, when the current content is not changed (S790: No), the recommendation timing determining unit 350 determines whether or not the viewing of current content is complete (S765). With this, the recommendation timing determining unit 350 waits until the viewing of the current content is complete.

On the other hand, when the current content is changed before the viewing completes (S790: Yes), the recommendation timing determining unit 350 obtains the recommendation for the related broadcast content again, as described above (S730).

In addition, the recommendation timing determining unit 350 may determine that the recommended content is not a future content (S760: No). A further option may be that the recommendation contains a content item that is chronologically related to the currently consumed broadcast content item in a manner that renders recommendation to be unadvisable for instance: if the recommendation contains the same content item that is currently being watched. In this case (S760: no), no recommendation is presented to the user and the procedure by the recommendation timing determining unit 350 continues with checking for a change in the consumed broadcast content item and a related recommendation (S710).

In case the procedure continues to present a recommendation to the user, the contained items may be adapted based on the decided timing. The adaptation may limit the recommended content items to relevant ones only as compared to the currently consumed content item. In case it is decided to instantly present the recommendation because it contains content items that are chronologically related to the parts of the broadcast content item currently being consumed; only these might be presented to the user. On the other hand, if it is decided to present the recommendation after the consumption of the broadcast content item is completed, only content items chronologically related to the future of the broadcast content item may be included in the presented recommendation.

However, the processing of the recommendation timing determining unit 350 for determining an appropriate timing is not limited to the exemplary cases detailed above. More complicated as well as simplified procedures are possible. For instance, a simplification of the flowchart of FIG. 6 is possible, wherein recommendation related to a serial program is always presented immediately (direct transition from S640 (yes) to S670). Also, the instances of time judged to be appropriate are not limited to "now" and "after current program" but may be any other appropriate time related to the current program and/or the recommendation content.

Furthermore, in the example of FIGS. 6 and 7, the content recommendation device 300 determines the recommendation content based on the relationship with the current content, and determined the recommendation timing. However, the content recommendation device 300 may determine the recommended content based on the relationship with the viewed content, and may determine the recommendation timing based on the relationship with the content that will be available for viewing in the future. In other words, the determination may not have to be based on the current content.

In the following, some further optional features of embodiments of a system according to the present invention are briefly described.

As mentioned above, as an exemplary class of network service based content related to broadcast content, catch-up services 110 have been described. However, there are also various other classes of related content.

A class of content delivered by network services is so-called user generated content (UGC) service. Typical examples are YouTube (registered trademark) and DailyMotion (registered trademark). These broadband services are characterized by containing content items corresponding to a broad range of sources. As the name implies, individual users may typically be the source of the content.

However, content related to broadcast content items may also be available from these broadband services. Typical examples are broadcasters 100 that upload current programs contents to UGC services. But also individual users may generate content items related to broadcast content, for example parodies of popular TV shows. Another example may be broadcasters that set up their own UGC services to let users upload content snippets of broadcast programs for which they own the copyright.

In contrast to catch-up services 110, the correlation to broadcast content might not be so obvious in the case of UGC services. For example, from the currently consumed broadcast content item it may be more difficult to determine which broadband service may contain related content. This may be the case as there might be no existing correlation between the broadcast channel and the UGC service, as is the case for catch-up services 110.

Further, it might be more difficult to determine which content item of a broadband service relates to the currently consumed broadcast content item. For example, the broadband services might use completely different naming conventions compared to the broadcast services. Another reason is that users might typically not bother to supply metadata to the files they upload, but simply give them a name.

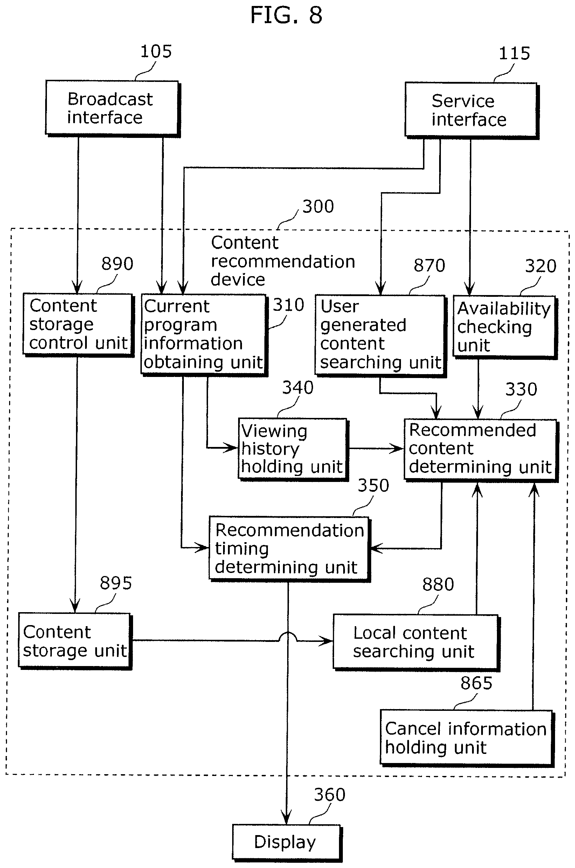

FIG. 8 illustrates an overview over the system components of a variation of the content recommendation system 300 according to the embodiment of the present invention.

Compared to the content recommendation device 300 in FIG. 3, a user generated content searching unit 870 is added to the content recommendation device 300 shown in FIG. 8. The main purpose of the user generated content searching unit 870 is to search related user generated content from one or more broadband services.

Therefore, the user generated content searching unit 870 may be provided with information about the requested content item, for instance, from the current content information obtaining unit 310. Optionally, this information may be adapted and/or enhanced by the user. For example, the system may present the user with a set of available tags for the broadcast content (for instance, those extracted from DVB SI) from which the users might choose, for example, by means of tick boxes.

The information may comprise, for example, a title or another content identifier. With this information the user generated content searching unit 870 may query different broadband services for content items. The results of the individual queries may be combined in a single list.

Different broadband content services may use different APIs and/or different formats for encoding the information about the available content, for instance, Extended Markup Language (XML) or Hypertext Markup Language (HTML).

Therefore, another function of the user generated content searching unit 870 may be to process different formats and to change or adapt the information obtained to a suitable form to be used in other functional components.

The list of recommended broadband content items generated by the user generated content searching unit 870 may be comprised in the recommendation processed by the recommendation timing determining unit 350. Unlike content items from broadcast-related broadband services, content items collected by the user generated content searching unit 870 may have no chronological relationship to the currently consumed broadcast item. Therefore, such items may be included in the content recommendation presented after the broadcast content has been completely consumed.

Another example of content available for recommendation includes programs recorded in a terminal device at the consumer's premises. Depending on the capabilities of the terminal device used for consuming broadcast and/or network based content items, thus another source of content might be the device itself. In particular, this is the case for devices containing storage capabilities. For example, the terminal device may include a hard disk drive (HDD) or other storage media such as an SD card. Typical examples of such devices are personal video recorders (PVR). But also some DTV devices comprise a SD card slot.

Accessing a content item from a broadband service may incur costs. For example, access to the content item may be charged. Another example is that independent of charged or free content access, the user may have to pay for broadband transmission. In such a case, it would be beneficial for the user to access a content item from a local storage, which is typically free of access or transmission charges.

Therefore the functional components the availability checking unit 320, the recommended content determining unit 330 and the recommendation timing determining unit 350 may be extended to search and recommend content items also from local storage means such as HDD or SD card. This may replace, overlap or complement the recommendation of content items from broadband services.

For example, the content recommendation device 300 illustrated in FIG. 8 includes the local content searching unit 880 and the content storage unit 895, in addition to the content recommendation device 300 illustrated in FIG. 3.

The content storage unit 895 is a storage device or the storage medium that stores the content, and is implemented as an HDD or an SD card, for example.

The local content searching unit 880 searches the content stored in the content storage unit 895. The content searched by the local content searching unit 880 is a target for determining the recommended content by the recommended content determining unit 330.

This allows determining appropriate recommended content among a large amount of content.

Furthermore, the content recommendation device 300 illustrated in FIG. 8 includes the content storage control unit 890, compared to the content recommendation device 300 in FIG. 3.

The content storage control unit 890 is a control unit that causes the content storage unit 895 to store the content.

The user cannot view other content while the recommended content according to the content recommendation is viewed. For example, there is a case where the content recommendation device 300 recommends the user to view the second episode, which has not been viewed, before the user views the third episode, which is the broadcast content. When the user views the second episode according to the recommendation, the user may miss the third episode, which is the broadcast content.

Thus, when the user views the second episode which is the recommended content, the content storage control unit 890 stores the third episode which is content related to the recommended content, in the content storage unit 895. With this, viewing the recommended content allows the user can reduce the possibility of missing the content that the user was going to view.

Furthermore, the content recommendation device 300 illustrated in FIG. 8 includes the cancel information holding unit 865, in addition to the components of the content recommendation device 300 illustrated in FIG. 3.

For example, there is a case where the user views the fourth episode without viewing the recommended third episode. It is not appropriate to recommend, after the viewing of the fourth episode and before the viewing of the fifth episode, the third episode which has not been viewed.

Thus, the cancel information holding unit 865 holds the information of the content which is recommended to the user and not viewed by the user. Subsequently, the recommended content determining unit 330 determines the recommended content excluding the content that has been recommended to the user but not viewed by the user, with reference to the information held in the cancel information holding unit 865.

With this, the content recommendation device 300 prevents the repetitive recommendation of the content that the user is not interested in. In addition, in order to achieve a similar result, the recommended content determining unit 330 may determine the recommended content excluding the content chronologically before the viewed content, with reference to the viewing history.

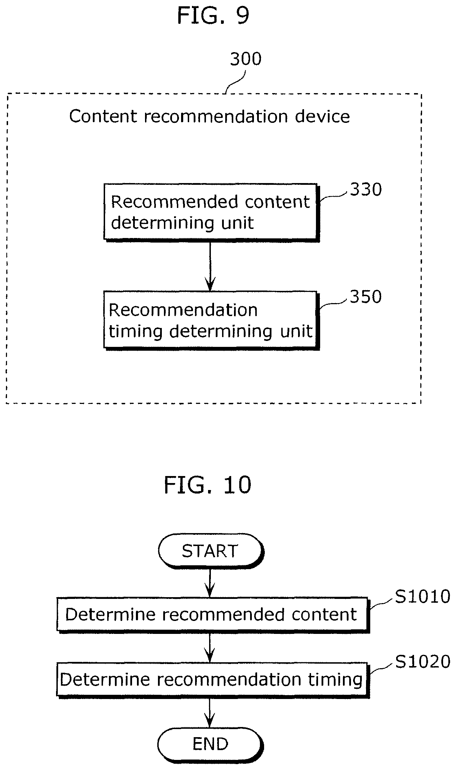

FIG. 9 illustrates major components of the content recommendation system 300 illustrated in FIG. 3.

The content recommendation device 300 illustrated in FIG. 9 includes the recommended content determining unit 330 and the recommendation timing determining unit 350.

The recommended content determining unit 330 determines the content related to the currently viewed content as the recommended content. The recommended content determining unit 330 may determine the content related to the content viewed by the user, instead of the currently viewed content as the recommended content. For example, the recommended content determining unit 330 may determine the recommended content by determining the preference of the user based on the viewing history.

More specifically, the recommended content determining unit 330 determines, as the recommended content, the content related to the content at least part of which is viewed by the user. Here, the content at least part of which is viewed by the user may be the currently viewed content or the content that has been viewed.

The recommendation timing determining unit 350 determines the recommendation timing for presenting the information of the recommended content, based on the chronological relationship between the recommended content and the currently viewed content. For example, the recommendation timing determining unit 350 determines, based on the chronological relationship, the recommendation timing as after the viewing when it is more appropriate to display the information on the recommended content after the user finishes viewing the currently viewed content.

Furthermore, the recommendation timing determining unit 350 may determine the recommendation timing based on the chronological relationship between, instead of the currently viewed content, the content that will be available to the user for viewing and the recommended content. For example, when the content that is chronologically after the recommended content will be broadcast in evening, the recommendation timing is determined to be before evening.

An example of the chronological relationship is the order of the content corresponding to episodes in a series. Another example is the order of the sport program, such as the first preliminary round, the second preliminary round, the final, and so on. The movie content and the sequel of the movie also have a chronological relationship.

Furthermore, the recommendation timing determining unit 350 may obtain the chronological relationship from the metadata assigned to the content, the file name assigned to the content, the time when the provision of content started, or the information generated by the EPG application, and so on. When there is no chronological relationship, the recommendation timing determining unit 350 may determine the recommendation timing after the viewing of the currently viewed content ends, so that the user is not annoyed.

FIG. 10 is a flowchart illustrating the process performed by the content recommendation device 300 illustrated in FIG. 9.

First, the recommended content determining unit 330 determines, as the recommended content, the content related to the currently viewed content or the content that has been viewed, that is, the content at least part of which is viewed by the user (S1010).

Then, the recommendation timing determining unit 350 determines the recommendation timing for presenting the information of the recommended content, based on the chronological relationship between the content that is currently available or will be available, and related to the recommended content and the recommended content (S1020).

This allows appropriate content to be recommended at an appropriate timing.

Note that the recommended content determining unit 330 may determine, as the recommended content, the content related to the currently available content or the content that will be available for viewing. In this case, the recommendation timing determining unit 350 determines the recommendation timing for presenting the information of the recommended content, based on the chronological relationship of the content that is currently available or that will be available and the recommendation content which is related to the content.

The content recommendation device 300 may be implemented as the content recommendation system as well. The content recommendation device 300 may provide, as a server, content suitable for a client. Alternatively, the server and the client may have the components of the content recommendation device 300 dispersedly.

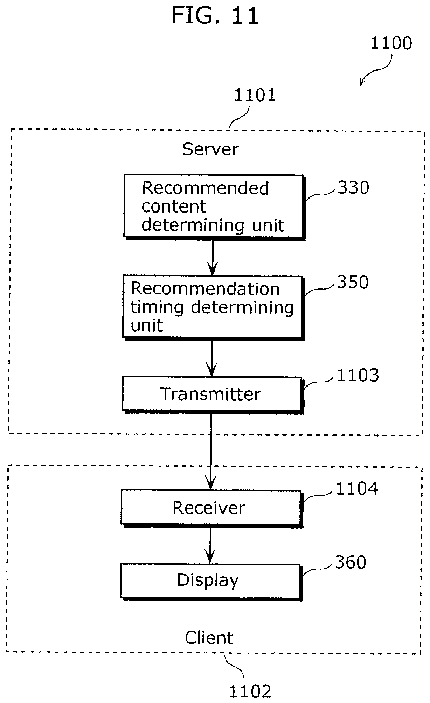

FIG. 11 illustrates an overview of the major components of a content recommendation system according to the embodiment of the present invention.

The content recommendation system 1100 illustrated in FIG. 11 includes the server 1101 and the client 1102. The server 1101 includes the recommended content determining unit 330 and the recommendation timing determining unit 350 which are also included in the content recommendation device 300 in FIG. 9. The server 1101 further includes the transmitter 1103. The client 1102 includes the receiver 1104 and the display 360.

With this, the server 1101 determines the recommended content and the recommendation timing. Subsequently, the transmitter 1103 transmits the information regarding the determined recommended content and the recommendation timing to the client 1102. Alternatively, the transmitter 11-3 may transmit the information of the recommended content at the recommendation timing determined by the recommendation timing determining unit 350.

The receiver 1104 in the client 1102 receives information regarding the recommended content and the recommendation timing. The display 360 displays the information regarding the recommended content at the recommended timing. Alternatively, the display 360 may display the information regarding the recommended content received by the receiver 1104 at the recommendation timing.

This allows appropriate content to be recommended with an appropriate timing. In addition, the function for determining the recommended content and the recommendation timing is aggregated in the server 1101, reducing the process by the client 1102. Note that the configuration of the dispersed processing units is not limited to the configuration illustrated in FIG. 11. The processing units illustrated in FIGS. 3 and 8 may be added to the server 1101 and the client 1102. Alternatively, any processing unit may also be provided in another device.

Furthermore, the content recommendation device 300 is also implemented as an integrated circuit.

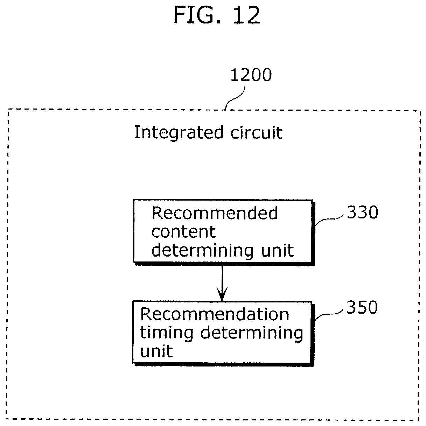

FIG. 12 illustrates an overview of the major components of an integrated circuit according to the embodiment of the present invention.

The integrated circuit 1200 illustrated in FIG. 12 includes the recommended content determining unit 330 and the recommendation timing determining unit 350. The recommended content determining unit 330 in the integrated circuit 1200 is identical to the recommended content determining unit 330 in the content recommendation device 300 in FIG. 9. In addition, the recommendation timing determining unit 350 in the integrated circuit 1200 is identical to the recommendation timing determining unit 350 in the content recommendation device 300 illustrated in FIG. 9.

With this, the integrated circuit 1200 can determine the appropriate recommended content and the appropriate recommendation timing. Furthermore, the recommendation timing determining unit 350 in the integrated circuit 1200 may cause the display 360 and others to display the information regarding the recommended content with the recommendation timing.

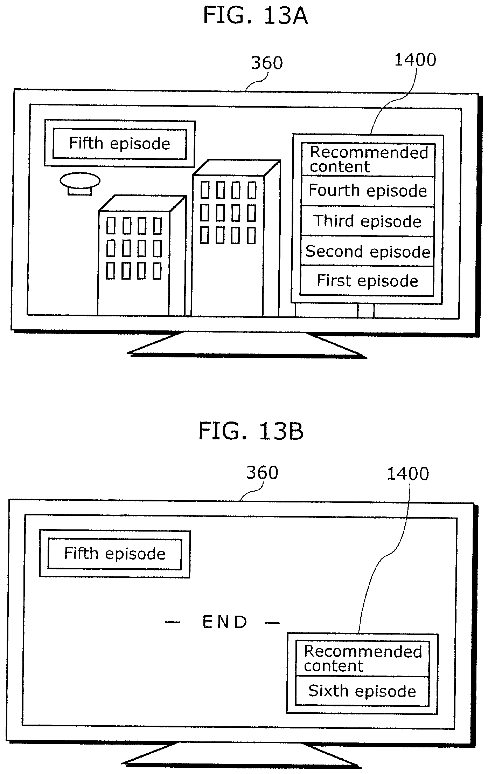

FIG. 13A illustrates a first display example according to the embodiment of the present invention. Here, an example in which the user is viewing the fifth episode is illustrated.

The display 360 displays the fifth episode. Here, the first, second, third, and fourth episodes which are related to the fifth episode and precedes the fifth episode in the chronological relationship are displayed as the recommended content 1400. This allows the user to check preceding episodes in the chronological relationship.

Note that, in this case, it is preferable that the content recommendation device 300 displays the information of the recommended content 1400 when the user starts to view the fifth episode. This allows the recommended content 1400 to be recommended with more appropriate timing.

FIG. 13B illustrates a second display example according to the embodiment of the present invention. Here, an example in which the user finished viewing the fifth episode is illustrated.

The display 360 displays the image at the end of the fifth episode. Here, the sixth episode which is related to the fifth episode and follows the fifth episode in the chronological relationship is displayed as the recommended content 1400. This allows the user to check following episodes in the chronological relationship.

Note that although the content recommendation device 300 causes the display 360 to display the information regarding the recommended content, the information regarding the recommended content may be presented to the user in audio. In this case, the content recommendation device 300 may not include the display 360.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

The present invention may not only be implemented as the content recommendation device or the content recommendation system, but also as a method including processing units composing the content recommendation device and the content recommendation system as steps. Furthermore, the present invention may be implemented as a program causing a computer to execute the steps included in these methods. Alternatively, the present invention may also be implemented as a computer readable recording medium such as a CD-ROM in which the program is recorded.

The content recommendation device and the content recommendation system according to the present invention can recommend the related content with an appropriate timing. In addition, the content recommendation device and the content recommendation system according to the present invention may recommend the content beyond the broadcast network and the service network.

Furthermore, the content recommendation device and the content recommendation system according to the present invention may use the content that is currently broadcast, past and future programs available at the network service such as the catch-up service, and the viewing history of the user. In addition, it is determined whether the available content should be recommended during the viewing of the currently broadcast content or after the viewing, for example.

### [Industrial Applicability]

The present invention is applicable to the content recommendation device, the content recommendation system, and the content recommendation method which recommend the recommended content to the user. Furthermore, the present invention is also applicable to the consumer electronic appliances such as digital television sets (DTV), digital video recorders (DVR), and personal video recorders (PVR).

### [Reference Signs List]

- 100: Broadcasters
- 102: Broadcast network
- 105: Broadcast interface
- 110: Catch-up services
- 112: Service network
- 113: CE server
- 115: Service interface
- 120: DTV devices
- 300: Content recommendation device
- 310: Current content information obtaining unit
- 320: Availability checking unit
- 330: Recommended content determining unit
- 340: Viewing history holding unit
- 350: Recommendation timing determining unit
- 360: Display
- 865: Cancel information holding unit
- 870: User generated content searching unit
- 880: Local content searching unit
- 890: Content storage control unit
- 895: Content storage unit
- 1100: Content recommendation system
- 1101: Server
- 1102: Client
- 1103: Transmitter
- 1104: Receiver
- 1200: Integrated circuit
- 1400: Recommended content

## Claims

1. A content recommendation device which recommends content to a user as recommended content, comprising:
a recommended content determining unit (330) configured to determine second content as the recommended content, the second content being related to first content that is at least partially viewed by the user; and
a recommendation timing determining unit (350) configured to determine a recommendation timing for presenting recommendation information (1400) for recommending the recommended content, according to whether the recommended content is chronologically before or after third content which is related to the second content determined as the recommended content and is currently available or will be available for viewing.

2. The content recommendation device according to claim 1, wherein said recommendation timing determining unit (350) is configured to determine the recommendation timing to be a point in time after the user viewed the third content, when the recommended content is chronologically after the third content.

3. The content recommendation device according to claim 1 or claim 2, wherein said recommendation timing determining unit (350) is configured to determine the recommendation timing to be a point in time between the present and a point in time when the third content becomes available, when the third content will be available in the future and the recommended content is chronologically before the third content.

4. The content recommendation device according to one of claims 1 to 3, wherein said recommendation timing determining unit (350) is configured to determine the recommendation timing as the present, when the third content is available and the recommended content is chronologically before the third content.

5. The content recommendation device according to one of claims 1 to 4, further comprising
a viewing history holding unit (340) configured to hold information of the first content as a viewing history,
wherein said recommended content determining unit (330) is configured to determine, with reference to the viewing history, the second content that is not viewed as the recommended content.

6. The content recommendation device according to claim 5, further comprising
a current content information obtaining unit (310) configured to obtain current content information which is the information of the first content,
wherein said current content information obtaining unit (310) is configured to update the viewing history with the obtained current content information.

7. The content recommendation device according to one of claims 1 to 5, further comprising
a current content information obtaining unit (310) configured to obtain current content information which is the information of the first content that is currently being viewed by the user,
wherein said recommended content determining unit (330) is configured to determine, using the current content information obtained by said current content information obtaining unit, the second content as the recommended content, the second content being related to the first content that is currently viewed by the user, and
said recommendation timing determining unit (330) is configured to determine the recommendation timing, using the current content information obtained by said current content information obtaining unit, according to whether the recommended content is chronologically before or after the third content which is identical to the first content that is currently being viewed by the user.

8. The content recommendation device according to one of claims 1 to 7,
wherein said recommended content determining unit (330) is configured to determine the second content as the recommended content, the second content being related to the first content that is at least partially viewed by the user when the first content is broadcast and being provided through a two-way communication, and
said recommendation timing determining unit (350) is configured to determine the recommendation timing, according to whether the recommended content is chronologically before or after the third content that is currently broadcast or will be broadcast.

9. The content recommendation device according to claim 8, further comprising
an availability checking unit (320) configured to check an availability of the second content provided through a network (112),
wherein said recommended content determining unit (330) is configured to determine the recommended content, based on the availability.

10. The content recommendation device according to claim 9, wherein said recommended content determining unit (330) is configured to determine the second content as the recommended content, the second content being confirmed, by said availability checking unit (340), as available through the network (112) and being not viewed.

11. The content recommendation device according to one of claims 1 to 10, further comprising
a user generated content searching unit (870) configured to search for user generated content,
wherein said recommended content determining unit (330) is further configured to determine the user generated content as the recommended content, when the user generated content searched by said user generated content searching unit (870) is related to the first content.

12. The content recommendation device according to one of claims 1 to 11, further comprising:
a content storage unit (895) configured to store content as local content; and
a content storage control unit (890) configured to store, in said content storage unit (895), the third content as the local content when the user views the recommended content.

13. The content recommendation device according to one of claims 1 to 11, further comprising:
a content storage unit (895) configured to store content as local content; and
a local content searching unit (880) configured to search the local content stored in said content storage unit (895),
wherein said recommended content determining unit (330) is further configured to determine the local content as the recommended content when the local content searched by said local content searching unit (880) is related to the first content.

14. The content recommendation device according to one of claims 1 to 13, wherein said recommended content determining unit (320) is configured not to determine the second content as the recommended content after the second content recommended as the recommended content to the user is not viewed by the user.

15. The content recommendation device according to one of claims 1 to 14, further comprising a display (360) which displays the recommendation information (1400) with the recommendation timing.

16. A content recommendation system which recommends content to a user as recommended content, comprising:
a server (113, 1101); and
a client (120, 1102) which is connected to the server (113, 1101) through a network (112),
wherein said server (113, 1101) includes:
a recommended content determining unit (330) configured to determine second content as the recommended content, the second content being related to first content that is at least partially viewed by the user; and
a recommendation timing determining unit (350) configured to determine a recommendation timing for presenting recommendation information (1400) for recommending the recommended content according to whether the recommended content is chronologically before or after third content which is related to the second content determined as the recommended content and is currently available or will be available for viewing; and
a transmitter (1103) which transmits the recommendation information (1400) for recommending the recommended content, and
said client (120, 1102) includes:
a receiver (1104) which receives the recommendation information (1400) for recommending the recommended content; and
a display (360) which displays the recommendation information (1400) for recommending the recommended content with the recommendation timing.

17. A content recommendation method which recommends content to a user as recommended content, comprising the steps of
determining (S520, S630, S730, S1010) second content as the recommended content, the second content being related to first content that is at least partially viewed by the user; and
determining (S1020) a recommendation timing for presenting recommendation information (1400) for recommending the recommended content according to whether the recommended content is chronologically before or after third content which is related to the second content determined as the recommended content and is currently available or will be available for viewing.

18. A non-transitory computer-readable recording medium for use in a computer, the recording medium having a computer program recorded thereon for causing a computer to execute the steps included in the content recommendation method according to claim 17.

19. An integrated circuit which recommends content to a user as recommended content, comprising:
a recommended content determining unit (330) configured to determine second content as the recommended content, the second content being related to first content that is at least partially viewed by the user; and
a recommendation timing determining unit (350) configured to determine a recommendation timing for presenting recommendation information (1400) for recommending the recommended content according to whether the recommended content is chronologically before or after third content which is related to the second content determined as the recommended content and is currently available or will be available for viewing.

## Patentansprüche

1. Inhaltsempfehlungseinrichtung, die einem Benutzer Inhalt als empfohlenen Inhalt empfiehlt, umfassend:
eine Bestimmungseinheit (330) für empfohlenen Inhalt, eingerichtet zum Bestimmen zweiten Inhalts als des empfohlenen Inhalts, wobei der zweite Inhalt in Beziehung steht zu erstem Inhalt, der wenigstens teilweise von dem Benutzer angesehen wird; und
eine Empfehlungs-Zeitvorgaben-Bestimmungseinheit (350), eingerichtet zum Bestimmen einer Empfehlungs-Zeitvorgabe zum Präsentieren von Empfehlungsinformation (1400) zum Empfehlen des empfohlenen Inhalts, je nachdem, ob der empfohlene Inhalt chronologisch vor oder nach drittem Inhalt ist, der in Beziehung zu dem zweiten Inhalt steht, der als der empfohlene Inhalt bestimmt wurde und der zum Ansehen aktuell verfügbar ist oder verfügbar sein wird.

2. Inhaltsempfehlungseinrichtung nach Anspruch 1, wobei die Empfehlungs-Zeitvorgaben-Bestimmungseinheit (350) eingerichtet ist, die Empfehlungs-Zeitvorgabe als einen Zeitpunkt, nachdem der Benutzer den dritten Inhalt angesehen hat, zu bestimmen, wenn der empfohlene Inhalt chronologisch nach dem dritten Inhalt ist.

3. Inhaltsempfehlungseinrichtung nach Anspruch 1 oder Anspruch 2, wobei die Empfehlungs-Zeitvorgaben-Bestimmungseinheit (350) eingerichtet ist, die Empfehlungs-Zeitvorgabe als einen Zeitpunkt zu bestimmen, zwischen der Gegenwart und einem Zeitpunkt, wenn der dritte Inhalt verfügbar wird, wenn der dritte Inhalt in der Zukunft verfügbar sein wird und der empfohlene Inhalt chronologisch vor dem dritten Inhalt ist.

4. Inhaltsempfehlungseinrichtung nach einem der Ansprüche 1 bis 3, wobei die Empfehlungs-Zeitvorgaben-Bestimmungseinheit (350) eingerichtet ist, die Empfehlungs-Zeitvorgabe als die Gegenwart zu bestimmen, wenn der dritte Inhalt verfügbar ist und der empfohlene Inhalt chronologisch vor dem dritten Inhalt ist.

5. Inhaltsempfehlungseinrichtung nach einem der Ansprüche 1 bis 4, weiterhin umfassend
eine Halteeinheit (340) für die Geschichte des Ansehens, eingerichtet zum Halten von Informationen über den ersten Inhalt als eine Geschichte des Ansehens,
wobei die Bestimmungseinheit (330) für empfohlenen Inhalt eingerichtet ist, um unter Bezug auf die Geschichte des Ansehens, den nicht angesehenen zweiten Inhalt als den empfohlenen Inhalt zu bestimmen.

6. Inhaltsempfehlungseinrichtung nach Anspruch 5, weiterhin umfassend
eine Beschaffungseinheit (310) für aktuelle Inhaltsinformation, eingerichtet zum Beschaffen aktueller Inhaltsinformation, die Information über den ersten Inhalt ist,
wobei die Beschaffungseinheit (310) für aktuellen Inhalt eingerichtet ist, die Geschichte des Ansehens mit der beschafften aktuellen Inhaltsinformation zu aktualisieren.

7. Inhaltsempfehlungseinrichtung nach einem der Ansprüche 1 bis 5, weiterhin umfassend
eine Beschaffungseinheit (310) für aktuelle Inhaltsinformation, eingerichtet zum Beschaffen aktueller Inhaltsinformation, die Information über den ersten Inhalt ist, der aktuell von dem Benutzer angesehen wird,
wobei die Bestimmungseinheit (330) für den empfohlenen Inhalt eingerichtet ist, unter Benutzung der von der Beschaffungseinheit für aktuelle Inhaltsinformation beschafften aktuellen Inhaltsinformation, den zweiten Inhalt als den empfohlenen Inhalt zu bestimmen, wobei der zweite Inhalt in Beziehung steht zu dem ersten Inhalt der aktuell von dem Benutzer betrachtet wird, und
die Empfehlungs-Zeitvorgabe-Bestimmungseinheit (330) eingerichtet ist, die Empfehlungs-Zeitvorgaben unter Benutzung der von der Beschaffungseinheit für aktuelle Inhaltsinformation beschafften aktuellen Inhaltsinformation zu bestimmen, je nachdem, ob der empfohlene Inhalt chronologisch vor oder nach drittem Inhalt ist, der identisch zu dem aktuell vom Benutzer angesehenen ersten Inhalt ist.

8. lnhaltsempfehlungseinrichtung nach einem der Ansprüche 1 bis 7,
wobei die Bestimmungseinheit (330) für empfohlenen Inhalt eingerichtet ist, den zweiten Inhalt als den empfohlenen Inhalt zu bestimmen, wobei der zweite Inhalt über eine Zwei-Wege-Kommunikation bereitgestellt wird und in Beziehung steht zu dem ersten Inhalt, der wenigstens teilweise von dem Benutzer angesehen wird, wenn der erste Inhalt gesendet wird, und
die Empfehlungs-Zeitvorgaben-Bestimmungseinheit (350) eingerichtet ist, die Empfehlungs-Zeitvorgabe danach zu bestimmen, ob der empfohlene Inhalt chronologisch vor oder nach drittem Inhalt ist, der aktuell gesendet wird oder gesendet werden wird.

9. Inhaltsempfehlungseinrichtung nach Anspruch 8, weiterhin umfassend
eine Verfügbarkeits-Überprüfungseinheit (320), eingerichtet, eine Verfügbarkeit des zweiten Inhalts, bereitgestellt durch ein Netzwerk (112), zu prüfen,
wobei die Bestimmungseinheit (330) für empfohlenen Inhalt eingerichtet ist, den empfohlenen Inhalt beruhend auf der Verfügbarkeit zu bestimmen.

10. Inhaltsempfehlungseinrichtung nach Anspruch 9, wobei die Bestimmungseinheit (330) für empfohlenen Inhalt eingerichtet ist, den zweiten Inhalt als den empfohlenen Inhalt zu bestimmen, wobei der zweite Inhalt durch die Verfügbarkeits-Überprüfungseinheit (340) als über das Netzwerk (112) verfügbar und nicht angesehen bestätigt wird.

11. Inhaltsempfehlungseinrichtung nach einem der Ansprüche 1 bis 10, weiterhin umfassend eine Sucheinheit (870) für benutzergenerierten Inhalt, eingerichtet, um nach benutzergenerierten Inhalt zu suchen,
wobei die Bestimmungseinheit (330) für empfohlenen Inhalt weiterhin eingerichtet ist, den benutzergenerierten Inhalt als den empfohlenen Inhalt zu bestimmen, wenn der von der Sucheinheit (870) für benutzergenerierten Inhalt genutzte benutzergenerierte Inhalt in Beziehung zu dem ersten Inhalt steht.

12. Inhaltsempfehlungseinrichtung nach einem der Ansprüche 1 bis 11, weiterhin umfassend:
eine Inhaltsspeichereinheit (895), eingerichtet zum Speichern von Inhalt als lokalen Inhalt, und
eine Inhaltsspeicher-Steuereinheit (890), eingerichtet, um den dritten Inhalt als den lokalen Inhalt in der Inhaltsspeichereinheit (895) zu speichern, wenn der Benutzer den empfohlenen Inhalt ansieht.

13. Inhaltsempfehlungseinrichtung nach einem der Ansprüche 1 bis 11, weiterhin umfassend:
eine Inhaltsspeichereinheit (895), eingerichtet zum Speichern von Inhalt als lokalen Inhalt, und
eine Sucheinheit (880) für lokalen Inhalt, eingerichtet zum Suchen des in der Inhaltsspeichereinheit (895) gespeicherten lokalen Inhalts,
wobei die Bestimmungseinheit (330) für empfohlenen Inhalt weiterhin eingerichtet ist, den lokalen Inhalt als den empfohlenen Inhalt zu bestimmen, wenn der von der Sucheinheit (880) für lokalen Inhalt gesuchte lokale Inhalt in Beziehung zu dem ersten Inhalt steht.

14. Inhaltsempfehlungseinrichtung nach einem der Ansprüche 1 bis 13, wobei die Bestimmungseinheit (320) für empfohlenen Inhalt eingerichtet ist, den zweiten Inhalt nicht als den empfohlenen Inhalt zu bestimmen, nachdem der zweite Inhalt, dem Benutzer empfohlen als der empfohlene Inhalt, von dem Benutzer nicht angesehen wird.

15. Inhaltsempfehlungseinrichtung nach einem der Ansprüche 1 bis 14, weiterhin umfassend eine Anzeigeeinrichtung (360), die die Empfehlungsinformation (1400) mit der Empfehlungs-Zeitvorgabe anzeigt.

16. Inhaltsempfehlungssystem, das einem Benutzer Inhalt als empfohlenen Inhalt empfiehlt, umfassend:
einen Server (113, 1101); und
einen Client (120, 1102), der mit dem Server (113, 1101) über ein Netzwerk (112) verbunden ist,
wobei der Server (113, 1101) enthält:
eine Bestimmungseinheit (330) für empfohlenen Inhalt, eingerichtet zum Bestimmen zweiten Inhalts als des empfohlenen Inhalts, wobei der zweite Inhalt in Beziehung steht zu erstem Inhalt, der wenigstens teilweise von dem Benutzer angesehen wird; und
eine Empfehlungs-Zeitvorgaben-Bestimmungseinheit (350), eingerichtet zum Bestimmen einer Empfehlungs-Zeitvorgabe zum Präsentieren von Empfehlungsinformation (1400) zum Empfehlen des empfohlenen Inhalts, je nachdem, ob der empfohlene Inhalt chronologisch vor oder nach drittem Inhalt ist, der in Beziehung zu dem zweiten Inhalt steht, der als der empfohlene Inhalt bestimmt wurde und der zum Ansehen aktuell verfügbar ist oder verfügbar sein wird; und
einen Übertrager (1103), der die Empfehlungsinformation (1400) zum Empfehlen des empfohlenen Inhalts überträgt, und
der Client (120, 1102) enthält:
einen Empfänger (1104), der die Empfehlungsinformation (1400) zum Empfehlen des empfohlenen Inhalts empfängt; und
eine Anzeigeeinrichtung (360), die die Empfehlungsinformation (1400) zum Empfehlen des empfohlenen Inhalts mit der Empfehlungs-Zzeitvorgabe anzeigt.

17. Inhaltsempfehlungsverfahren, welches einem Benutzer Inhalt als empfohlenen Inhalt empfiehlt, umfassend die Schritte
Bestimmen (S520, S630, S730, S1010) zweiten Inhalts als des empfohlenen Inhalts, wobei der zweite Inhalt in Beziehung steht zu erstem Inhalt, der wenigstens teilweise von dem Benutzer angesehen wird; und
Bestimmen (S1020) einer Empfehlungs-Zeitvorgabe zum Präsentieren von Empfehlungsinformation (1400) zum Empfehlen des empfohlenen Inhalts, je nachdem, ob der empfohlene Inhalt chronologisch vor oder nach drittem Inhalt ist, der in Beziehung zu dem zweiten Inhalt steht, der als der empfohlene Inhalt bestimmt wurde und der zum Ansehen aktuell verfügbar ist oder verfügbar sein wird.

18. Nichtflüchtiges computerlesbares Aufzeichnungsmedium zur Benutzung in einem Computer, wobei auf dem Aufzeichnungsmedium ein Computerprogramm aufgezeichnet ist, welches einen Computer veranlasst, die in einem Inhaltsempfehlungsverfahren nach Anspruch 17 enthaltenen Schritte auszuführen.

19. Integrierter Schaltkreis, der einem Benutzer Inhalt als empfohlenen Inhalt empfiehlt, umfassend:
eine Bestimmungseinheit (330) für empfohlenen Inhalt, eingerichtet zum Bestimmen zweiten Inhalts als des empfohlenen Inhalts, wobei der zweite Inhalt in Beziehung steht zu erstem Inhalt, der wenigstens teilweise von dem Benutzer angesehen wird; und
eine Empfehlungs-Zeitvorgaben-Bestimmungseinheit (350), eingerichtet zum Bestimmen einer Empfehlungs-Zeitvorgabe zum Präsentieren von Empfehlungsinformation (1400) zum Empfehlen des empfohlenen Inhalts, je nachdem, ob der empfohlene Inhalt chronologisch vor oder nach drittem Inhalt ist, der in Beziehung zu dem zweiten Inhalt steht, der als der empfohlene Inhalt bestimmt wurde und der zum Ansehen aktuell verfügbar ist oder verfügbar sein wird.

## Revendications

1. Dispositif de recommandation de contenu qui recommande un contenu à un utilisateur comme contenu recommandé, comprenant :
une unité de détermination de contenu recommandé (330) configurée pour déterminer un deuxième contenu comme contenu recommandé, le deuxième contenu étant relié à un premier contenu qui est au moins partiellement visualisé par l'utilisateur ; et
une unité de détermination de synchronisation de recommandation (350) configurée pour déterminer une synchronisation de recommandation pour présenter de l'information de recommandation (1400) afin de recommander le contenu recommandé, selon que le contenu recommandé est chronologiquement avant ou après un troisième contenu qui est relié au deuxième contenu déterminé comme contenu recommandé et est actuellement disponible ou sera disponible pour être visualisé.

2. Dispositif de recommandation de contenu selon la revendication 1, dans lequel ladite unité de détermination de synchronisation de recommandation (350) est configurée pour déterminer la synchronisation de recommandation comme étant un point temporel après que l'utilisateur a visualisé le troisième contenu, quand le contenu recommandé est chronologiquement après le troisième contenu.

3. Dispositif de recommandation de contenu selon la revendication 1 ou 2, dans lequel ladite unité de détermination de synchronisation de recommandation (350) est configurée pour déterminer la synchronisation de recommandation comme étant un point temporel entre le présent et un point temporel quand le troisième contenu devient disponible, quand le troisième contenu sera disponible dans le futur et le contenu recommandé est chronologiquement avant le troisième contenu.

4. Dispositif de recommandation de contenu selon l'une des revendications 1 à 3, dans lequel ladite unité de détermination de synchronisation de recommandation (350) est configurée pour déterminer la synchronisation de recommandation comme étant le temps présent, quand le troisième contenu est disponible et le contenu recommandé est chronologiquement avant le troisième contenu.

5. Dispositif de recommandation de contenu selon l'une des revendications 1 à 4, comprenant en outre
une unité de support d'historique de visualisation (340) configurée pour contenir de l'information du premier contenu comme historique de visualisation,
dans lequel ladite unité de détermination de contenu recommandé (330) est configurée pour déterminer, en référence à l'historique de visualisation, le deuxième contenu qui n'est pas visualisé comme contenu recommandé.

6. Dispositif de recommandation de contenu selon la revendication 5, comprenant en outre
une unité d'obtention d'information de contenu actuelle (310) configurée pour obtenir de l'information de contenu actuelle qui est l'information du premier contenu,
dans lequel ladite unité d'obtention d'information de contenu actuelle (310) est configurée pour mettre à jour l'historique de visualisation avec l'information de contenu actuelle obtenue.

7. Dispositif de recommandation de contenu selon l'une des revendications 1 à 5, comprenant en outre
une unité d'obtention d'information de contenu actuelle (310) configurée pour obtenir de l'information de contenu actuelle qui est l'information du premier contenu actuellement visualisé par l'utilisateur,
dans lequel ladite unité de détermination de contenu recommandé (330) est configurée pour déterminer, en utilisant l'information de contenu actuelle obtenue par ladite unité d'obtention d'information de contenu actuelle, le deuxième contenu comme contenu recommandé, le deuxième contenu étant relié au premier contenu actuellement visualisé par l'utilisateur, et
ladite unité de détermination de synchronisation de recommandation (330) est configurée pour déterminer la synchronisation de recommandation, en utilisant l'information de contenu actuelle obtenue par ladite unité d'obtention d'information de contenu actuelle, selon que le contenu recommandé est chronologiquement avant ou après le troisième contenu, qui est identique au premier contenu actuellement visualisé par l'utilisateur.

8. Dispositif de recommandation de contenu selon l'une des revendications 1 à 7,
dans lequel ladite unité de détermination de contenu recommandé (330) est configurée pour déterminer le deuxième contenu comme contenu recommandé, le deuxième contenu étant relié au premier contenu qui est au moins partiellement visualisé par l'utilisateur quand le premier contenu est diffusé, et étant pourvu via une communication bidirectionnelle, et
ladite unité de détermination de synchronisation de recommandation (350) est configurée pour déterminer la synchronisation de recommandation, selon que le contenu recommandé est chronologiquement avant ou après le troisième contenu qui est actuellement diffusé ou qui sera diffusé.

9. Dispositif de recommandation de contenu selon la revendication 8, comprenant en outre
une unité de vérification de disponibilité (320) configurée pour vérifier une disponibilité du deuxième contenu pourvu via un réseau (112),
dans lequel ladite unité de détermination de contenu recommandé (330) est configurée pour déterminer le contenu recommandé, sur base de la disponibilité.

10. Dispositif de recommandation de contenu selon la revendication 9, dans lequel ladite unité de détermination de contenu recommandé (330) est configurée pour déterminer le deuxième contenu comme contenu recommandé, le deuxième contenu étant confirmé, par ladite unité de vérification de disponibilité (340), comme étant disponible via le réseau (112) et n'étant pas visualisé.

11. Dispositif de recommandation de contenu selon l'une des revendications 1 à 10, comprenant en outre
une unité de recherche de contenu généré par l'utilisateur (870) configurée pour chercher un contenu généré par l'utilisateur,
dans lequel ladite unité de détermination de contenu recommandé (330) est en outre configurée pour déterminer le contenu généré par l'utilisateur comme étant le contenu recommandé, quand le contenu généré par l'utilisateur cherché par ladite unité de recherche de contenu généré par l'utilisateur (870) est relié au premier contenu.

12. Dispositif de recommandation de contenu selon l'une des revendications 1 à 11, comprenant en outre :
une unité de stockage de contenu (895) configurée pour stocker un contenu comme contenu local ; et
une unité de commande de stockage de contenu (890) configurée pour stocker, dans ladite unité de stockage de contenu (895), le troisième contenu comme contenu local quand l'utilisateur visualise le contenu recommandé.

13. Dispositif de recommandation de contenu selon l'une des revendications 1 à 11, comprenant en outre :
une unité de stockage de contenu (895) configurée pour stocker un contenu comme contenu local ; et
une unité de recherche de contenu local (880) configurée pour chercher le contenu local stocké dans ladite unité de stockage de contenu (895),
dans lequel ladite unité de détermination de contenu recommandé (330) est en outre configurée pour déterminer le contenu local comme contenu recommandé quand le contenu local recherché par ladite unité de recherche de contenu local (880) est relié au premier contenu.

14. Dispositif de recommandation de contenu selon l'une des revendications 1 à 13, dans lequel ladite unité de détermination de contenu recommandé (320) est configurée pour ne pas déterminer le deuxième contenu comme contenu recommandé après que le deuxième contenu recommandé comme contenu recommandé à l'utilisateur n'est pas visualisé par l'utilisateur.

15. Dispositif de recommandation de contenu selon l'une des revendications 1 à 14, comprenant en outre un affichage (360) qui affiche l'information de recommandation (1400) avec la synchronisation de recommandation.

16. Système de recommandation de contenu qui recommande un contenu à un utilisateur comme contenu recommandé, comprenant :
un serveur (113, 1101) ; et
un client (120, 1102) qui est connecté au serveur (113, 1101) via un réseau (112),
dans lequel ledit serveur (113, 1101) comprend :
une unité de détermination de contenu recommandé (330) configurée pour déterminer un deuxième contenu comme contenu recommandé, le deuxième contenu étant relié à un premier contenu qui est au moins partiellement visualisé par l'utilisateur ; et
une unité de détermination de synchronisation de recommandation (350) configurée pour déterminer une synchronisation de recommandation pour présenter de l'information de recommandation (1400) afin de recommander le contenu recommandé, selon que le contenu recommandé est chronologiquement avant ou après un troisième contenu qui est relié au deuxième contenu déterminé comme contenu recommandé et est actuellement disponible ou sera disponible pour être visualisé ; et
un transmetteur (1103) qui transmet l'information de recommandation (1400) afin de recommander le contenu recommandé, et
ledit client (120, 1102) inclut :
un récepteur (1104) qui reçoit l'information de recommandation (1400) afin de recommander le contenu recommandé ; et
un affichage (360) qui affiche l'information de recommandation (1400) afin de recommander le contenu recommandé avec la synchronisation de recommandation.

17. Procédé de recommandation de contenu qui recommande un contenu à un utilisateur comme contenu recommandé, comprenant les étapes suivantes :
détermination (S520, S630, S730, S1010) d'un deuxième contenu comme contenu recommandé, le deuxième contenu étant relié à un premier contenu qui est au moins partiellement visualisé par l'utilisateur ; et
détermination (S1020) d'une synchronisation de recommandation pour présenter de l'information de recommandation (1400) afin de recommander le contenu recommandé, selon que le contenu recommandé est chronologiquement avant ou après un troisième contenu qui est relié au deuxième contenu déterminé comme contenu recommandé et est actuellement disponible ou sera disponible pour être visualisé.

18. Support d'enregistrement lisible par un ordinateur non volatile destiné à être utilisé dans un ordinateur, un programme informatique étant enregistré sur le support d'enregistrement pour commander à un ordinateur d'exécuter les étapes incluses dans le procédé de recommandation de contenu selon la revendication 17.

19. Circuit intégré qui recommande un contenu à un utilisateur comme contenu recommandé, comprenant :
une unité de détermination de contenu recommandé (330) configurée pour déterminer un deuxième contenu comme contenu recommandé, le deuxième contenu étant relié à un premier contenu qui est au moins partiellement visualisé par l'utilisateur ; et
une unité de détermination de synchronisation de recommandation (350) configurée pour déterminer une synchronisation de recommandation pour présenter de l'information de recommandation (1400) afin de recommander le contenu recommandé, selon que le contenu recommandé est chronologiquement avant ou après un troisième contenu qui est relié au deuxième contenu déterminé comme contenu recommandé et est actuellement disponible ou sera disponible pour être visualisé.
